# FASCICULE DE BREVET EUROPEEN

(11) **EP 0 834 426 B1**
(45) Date de publication et mention de la délivrance du brevet: **25.06.2003**
(21) Numéro de dépôt: 97402275.8
(22) Date de dépôt: 30.09.1997
(51) Int. Cl.: B60R 16/02

(54) **Ensemble pour haut de colonne de direction imposant une position de montage de volant**
Einrichtung am Lenksäulenoberteil zur vorbestimmten Montage eines Lenkrades
Assembly for top of steering column defining an assembly position for the steering wheel

(30) Priorité: 01.10.1996 FR 9611934
(43) Date de publication de la demande: 08.04.1998
(73) Titulaire: SC2N, 78180 Montigny-le-Bretonneux (FR)
(72) Inventeur: Hallet, Michel, 14320 Clinchamps sur Orne (FR)
(74) Mandataire: Texier, Christian

(56) Documents cités:
- DE-A- 4 436 172
- US-A- 4 867 688
- US-A- 5 314 344

## Description

La présente invention concerne un ensemble pour haut de colonne de direction de véhicule automobile, conçu pour imposer une position de montage unique au volant.

Le document US-A-4 867 688 décrit un ensemble pour haut de colonne de direction de véhicule automobile comprenant un premier élément de boîtier fixe conçu pour être fixé sur le haut d'une colonne de direction, un second élément de boîtier mobile conçu pour être lié à rotation avec le volant, et des moyens de contrôle en prise à la fois avec le premier élément de boîtier fixe et le second élément de boîtier mobile pour être déplacés par rapport à ceux-ci lors d'une rotation relative entre ces éléments.

Les opérations de montage et démontage de volant de véhicule automobile sont parfois délicates à réaliser.

En effet, d'une part il est nécessaire, lors du montage ou remontage, que la position du volant coïncide avec la position des roues - celà notamment lorsque le haut de colonne possède un contacteur électrique tournant comme on le verra par la suite -.

D'autre part, il est généralement préférable que les opérations de montage et démontage du volant soient opérées en position "roues droites" - ceci pour permettre un fonctionnement satisfaisant du contacteur électrique tournant, mais également pour des facilités d'interventions lors des opérations de maintenance.

Il serait donc souhaitable d'équiper les hauts de colonne de direction de véhicules automobiles, de moyens imposant une position de montage unique du volant, correspondant de préférence à une position dite point milieu pour laquelle les roues sont "droites" parallèles à la direction longitudinale du véhicule.

Cependant, les moyens jusqu'ici proposés pour tenter de remplir cette fonction, ne donnent pas totalement satisfaction.

La présente invention vient remédier à cette situation grâce un ensemble pour haut de colonne de direction tel que défini en revendication 1 annexée.

Lesdits moyens de contrôle peuvent imposer la position unique de montage du volant grâce à des moyens à compléments de forme qui n'autorisent la mise en place du volant que dans une position relative unique prédéterminée des deux éléments, fixe et mobile.

De préférence, les moyens de contrôle imposent la position unique de montage du volant grâce à un volet ou un masque mobile qui n'autorisent l'accès aux moyens de fixation du volant que dans une position relative unique des deux éléments.

Selon un premier mode de réalisation de l'invention, l'ensemble, comporte :
- une rainure radiale prévue sur une première pièce,
- une gorge spiralée et une rampe prévues sur une seconde pièce susceptible de rotation relative par rapport à la première,
- un index en prise, d'une part avec la gorge spiralée et, d'autre part avec la rainure radiale de sorte que ledit index soit déplacé radialement dans la rainure lors d'un déplacement relatif entre les deux pièces, ledit index comportant une gorge, et
- un masque adapté pour être engagé dans la gorge de l'index et reposant sur la rampe de la seconde pièce de sorte que ladite rampe n'autorise l'engagement du masque dans la gorge que dans une position unique prédéterminée relative entre l'élément fixe et l'élément mobile.

De préférence, le masque interdit l'accès aux moyens de fixation du volant lorsqu'il est sollicité vers l'extérieur de la gorge de l'index par ladite rampe.

Selon un deuxième mode de réalisation de l'invention, l'ensemble comporte un volet de détrompage articulé à pivotement sur l'un des éléments et des moyens d'entraînement du volet de détrompage qui comprennent un guide spirale lié à l'autre élément et concentrique à l'axe de rotation relative des deux éléments et un index qui est d'une part articulé sur le volet de détrompage et d'autre part engagé dans le guide spirale. Le volet de détrompage est de préférence monté à déplacement à la fois à pivotement et à translation (coulissement) sur l'un des éléments. Dans le cadre de cette variante, l'autre élément est muni de préférence d'une cavité recevant une structure en forme de came liée au volet de détrompage, pour déplacer celui-ci hors de sa position de repos dès que le contacteur est écarté de sa position, dite position relative unique.

Selon un troisième mode de réalisation de l'invention, l'ensemble comporte :
- une rainure spiralée sur une pièce liée à rotation avec un élément,
- au moins un pignon muni d'un doigt engagé dans ladite rainure spiralée, lequel pignon est en prise avec une pièce liée à l'autre élément, et
- un masque monté à déplacement sur le contacteur et en prise avec ledit pignon lequel masque possède au moins une encoche périphérique qui n'est libérée, pour autoriser la mise en place du contacteur, que dans une position unique prédéterminée desdits éléments.

De péférence, ledit ensemble conforme à la présente invention constitue en outre un contacteur électrique rotatif.

Dans ce cas, ledit ensemble comporte en outre un organe conducteur électrique souple placé entre l'élément fixe et l'élément mobile du boîtier et relié à ceux-ci.

Ainsi ledit ensemble conforme à la présente invention trouve notamment, mais non exclusivement, application à la transmission de signaux électriques entre des moyens liés au volant d'un véhicule automobile, par exemple un système de gonflage de sac de protection type airbag et des moyens de commande indépendants du volant liés à la colonne de direction.

De nombreux contacteurs électriques tournants ont déjà été proposés.

On peut trouver par exemple un descriptif général de ces contacteurs dans les documents GB-A-869275, GB-A-2216476, US-A-3525536, FR-A-2494922, FR-A-2667457, US-A-4789342, US-A-4540223, FR-A-2667458, FR-A-2667456, FR-A-2477789, DE-C-751684, FR-A-2249458, GB-A-2164506, CH-A-167629, US-A-4422699, US-A-4836795, DE-A-3041258, US-A-4451105, US-A-3525536, US-A-4722690, US-A-4875860.

On a décrit en particulier dans le document FR-A-2667457 un dispositif de transmission de signaux du type précité comprenant deux cages respectivement externe et interne susceptibles de rotation relative et des moyens souples conducteurs de signal placés entre les deux cages, dans lequel le dispositif comprend un système d'indexage formé, d'une part d'un guide en spirale ménagé sur une première pièce, et d'autre part d'un doigt d'indexage engagé sur le guide en spirale et placé dans une fenêtre ménagée dans une seconde pièce susceptible de rotation par rapport à la première pièce, de sorte que le doigt d'indexage soit déplacé radialement par rapport à l'axe de rotation des pièces lorsque celles-ci sont entraînées à rotation relative.

Les moyens décrits dans ce document permettent de détecter la position relative médiane ou "point milieu" entre les deux éléments de base du contacteur, lorsqu'un index prévu sur le doigt d'indexage coïncide avec un index placé en regard sur ladite second pièce.

L'homme de l'art comprendra que l'invention permet ainsi d'imposer une position relative de montage et de démontage du contacteur correspondant à une position médiane, généralement dite "point milieu", de la course à rotation du contacteur et par conséquent de garantir une position du contacteur compatible avec la position du volant et de l'arbre de direction.

D'autres caractéristiques, buts et avantages de l'invention apparaîtront à la lecture de la description détaillée qui va suivre, et en regard des dessins annexés, donnés à titre d'exemple non limitatif et sur lesquels :
- la figure 1 représente une vue en perspective éclatée d'un contacteur conforme à la présente invention, en point milieu, masque engagé dans la gorge de l'index,
- la figure 2 représente une vue latérale de ce contacteur, assemblé en point milieu,
- la figure 3 représente une autre vue en perspective du contacteur en point milieu,
- les figures 4 et 5 représentent deux vues en perspective respectivement comparables aux figures 1 et 3 du même contacteur lorsque celui-ci s'écarte de sa position milieu,
- les figures 6 et 7 représentent deux autres vues en perspective du contacteur après rotation relative du contacteur sur plus d'un tour,
- la figure 8 représente une vue de détail de ce contacteur après une telle rotation,
- les figures 9 et 10 représentent schématiquement un haut de colonne de direction respectivement en vue latérale et en vue axiale et illustrent l'application d'un ensemble conforme à la présente invention pour imposer une position unique de montage et démontage de volant,
- la figure 11 représente une vue schématique en perspective éclatée d'un contacteur conforme à un deuxième mode de réalisation de la présente invention,
- la figure 12 représente une autre vue en perspective du même contacteur,
- la figure 13 représente une troisième vue en perspective du même contacteur, comparable à la figure 11, après rotation relative entre les deux éléments de base du contacteur,
- les figures 14, 15, 16 et 17 représentent des vues partielles du contacteur conforme à la présente invention, et plus précisément de son volet de détrompage, dans quatre positions relatives différentes des éléments de base du contacteur,
- la figure 18 représente une vue schématique similaire à la figure 13 d'un contacteur conforme à une autre variante de réalisation de l'invention,
- la figure 19 représente une autre vue en perspective du contacteur conforme à cette variante selon une vue similaire à la figure 12,
- les figures 20 à 24 représentent des vues partielles du contacteur conforme à cette variante de l'invention dans cinq positions relatives différentes des éléments de base du contacteur,
- la figure 25 représente une vue axiale partielle d'un contacteur électrique rotatif conforme à un troisième mode de réalisation de la présente invention en position point milieu,
- la figure 26 représente une vue en coupe longitudinale de ce contacteur,
- la figure 27 représente une vue similaire à la figure 25 du contacteur hors point milieu,
- la figure 28 représente une vue en coupe longitudinale similaire à la figure 26 du contacteur hors point milieu,
- les figures 29 et 30 représentent des vues partielles en perspective du contacteur hors point milieu, respectivement après un tour et 2,5 tours à partir d'un tel point milieu,
- la figure 31 représente une vue en coupe longitudinale d'un système conforme à la présente invention dans son application anti-démontage de volant hors point milieu,
- les figures 32 et 33 représentent deux vues en perspective éclatée d'un contacteur rotatif conforme à la présente invention, et
- les figures 34 et 35 représentent deux vues en coupe longitudinale du contacteur rotatif conforme à la présente invention sur un haut de colonne respectivement en position point milieu et hors point milieu.

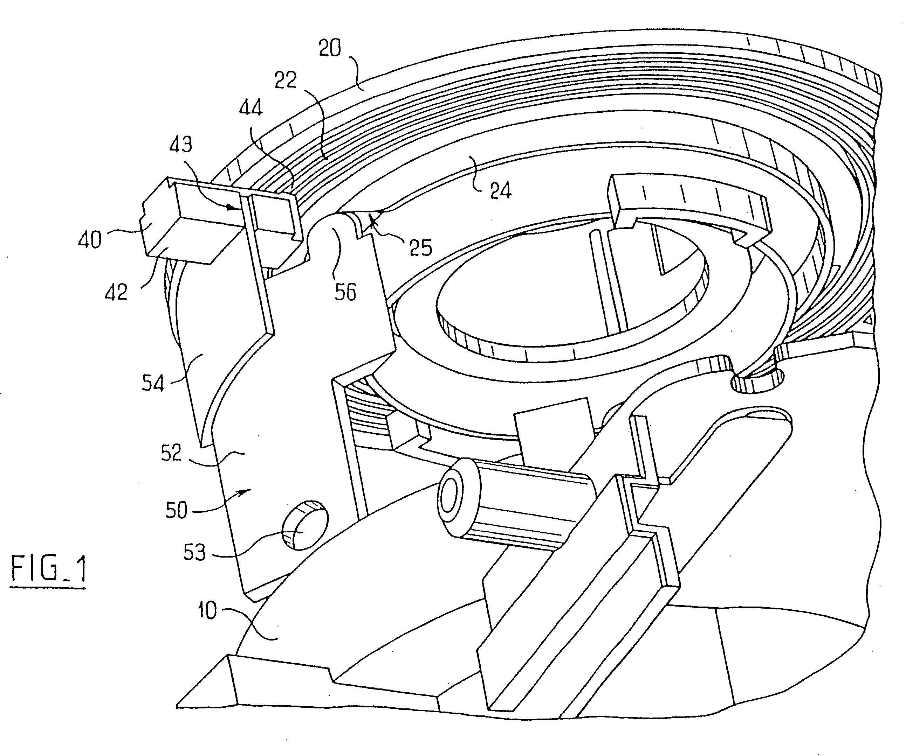

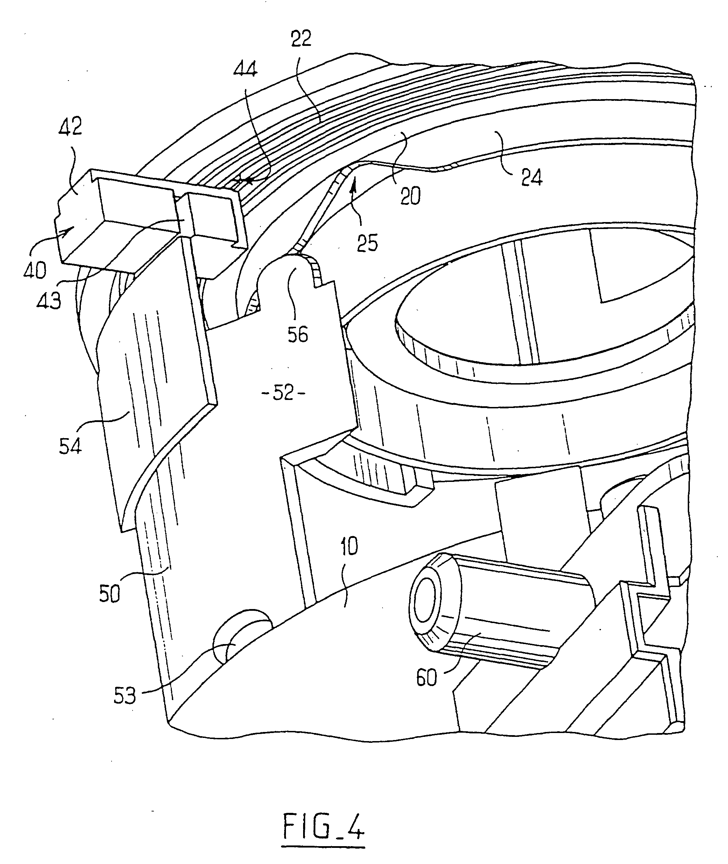

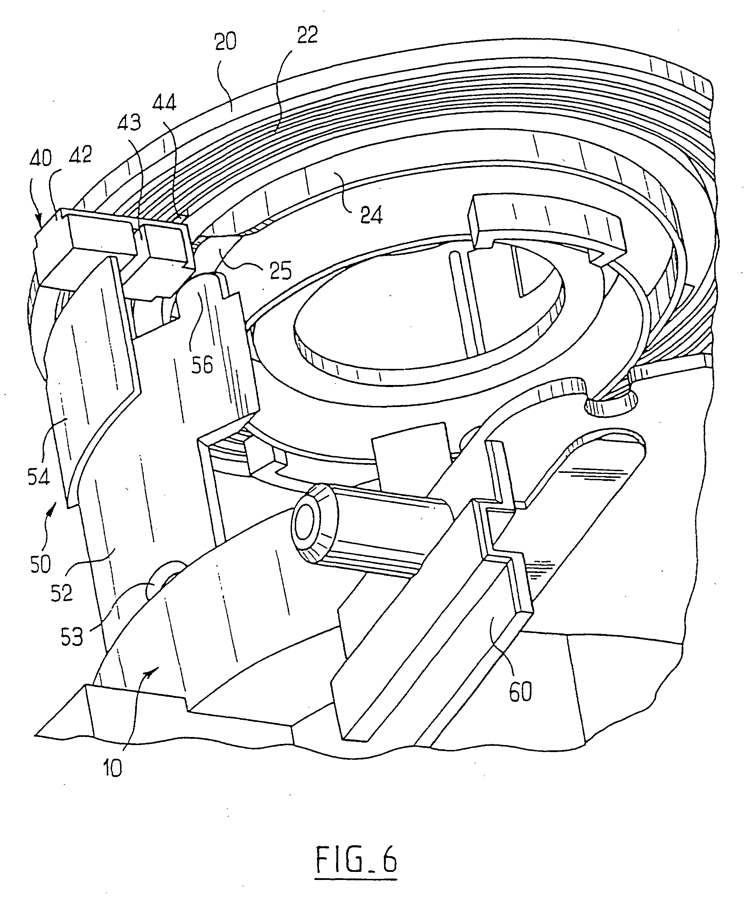

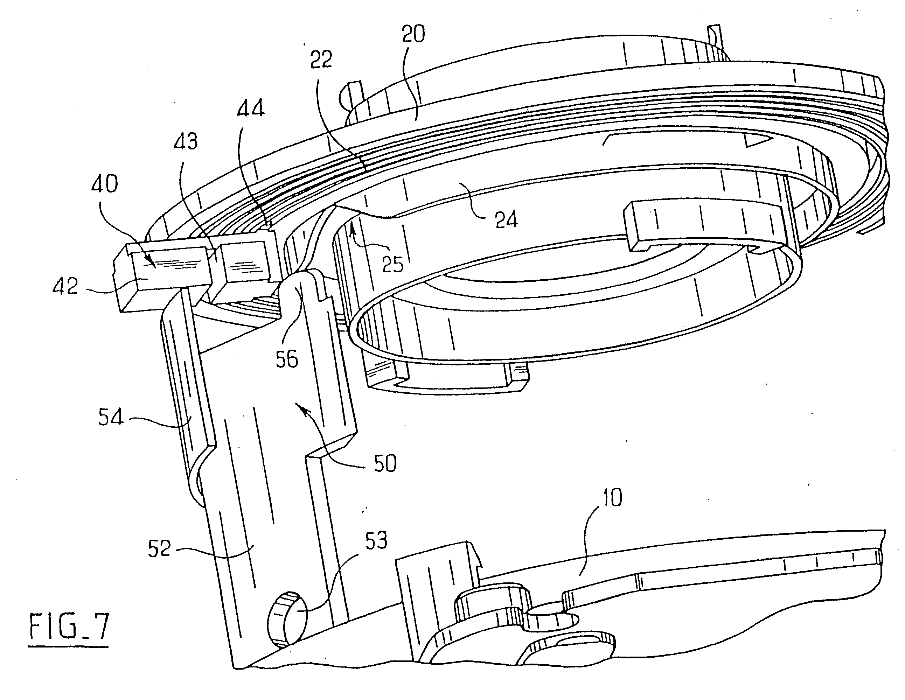

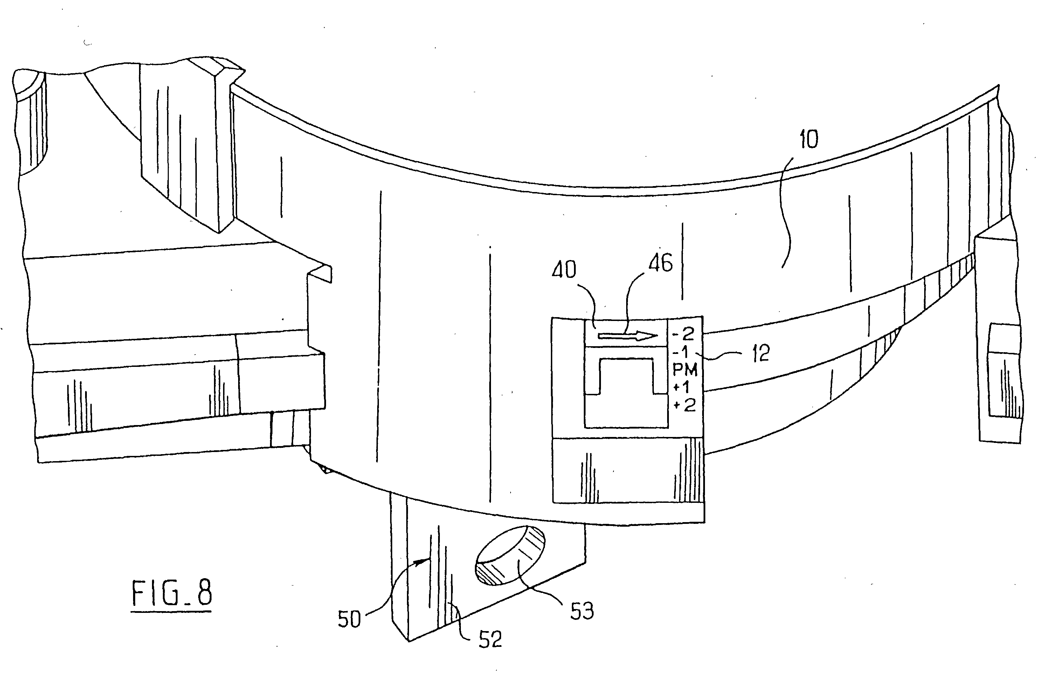

On va tout d'abord décrire l'ensemble formant contacteur électrique conforme au premier mode de réalisation de l'invention illustré sur les figures 1 à 8.

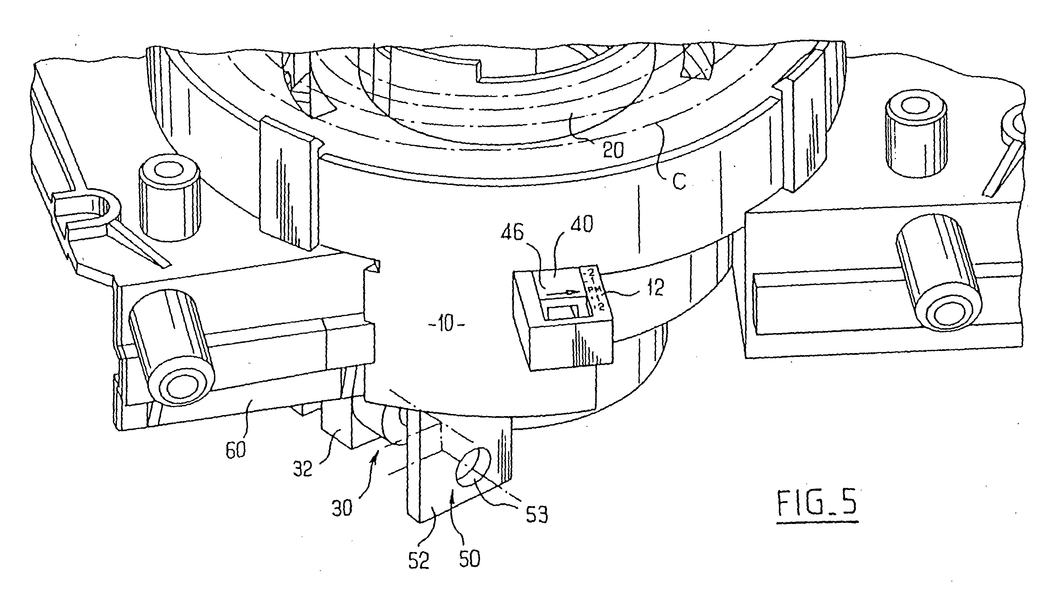

Le contacteur électrique rotatif conforme à la présente invention illustré sur ces figures 1 à 8 comprend essentiellement :
- deux éléments de boîtier 10, 20 susceptibles de rotation relative, tels qu'un élément fixe 10, adapté par exemple pour être fixé sur un haut de colonne de direction, et un élément rotatif 20, adapté par exemple pour être lié à rotation avec le volant (ou inversement un élément 10 mobile et un élément 20 fixe)
- un élément électriquement conducteur C (schématiquement illustré en traits interrompus sur la figure 5) dont les extrémités sont fixées respectivement sur l'élément fixe 10 et sur l'élément rotatif 20,
- un index 40 et
- un masque 50.

On aperçoit également sur les figures 1 à 8 des moyens de fixation 30.

La structure de base du contacteur constituée de l'élément fixe 10, de l'élément mobile 20 et de l'élément conducteur C, classique en elle-même et bien connue de l'homme de l'art ne sera pas décrite dans le détail par la suite.

Néanmoins dans le cadre de l'invention, de façon caractéristique, l'élément fixe 10 possède une rainure radiale (non visible sur les figures).

En outre, l'élément mobile 20 comporte une gorge spiralée 22 et une rampe 24.

La gorge 22 est centrée sur l'axe de rotation du contacteur. Elle est de préférence formée sur la face de l'élément mobile 20 dirigée vers l'élément fixe 10.

La rampe 24 formée de préférence sur la même face de l'élément mobile 20, est constituée d'une nervure annulaire comportant un décrochement localisé 25.

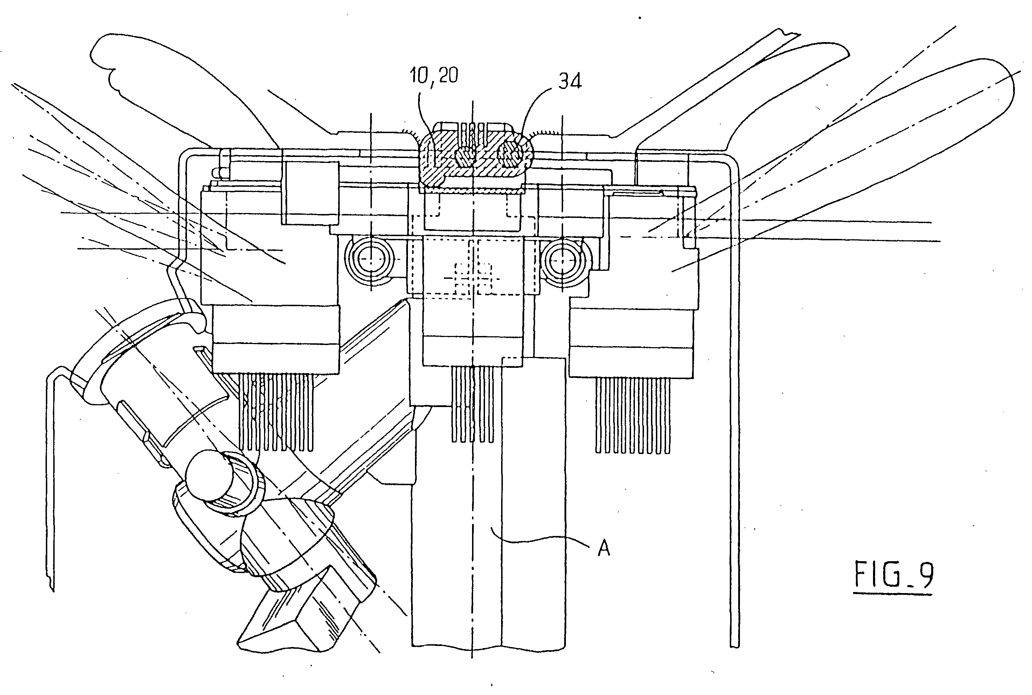

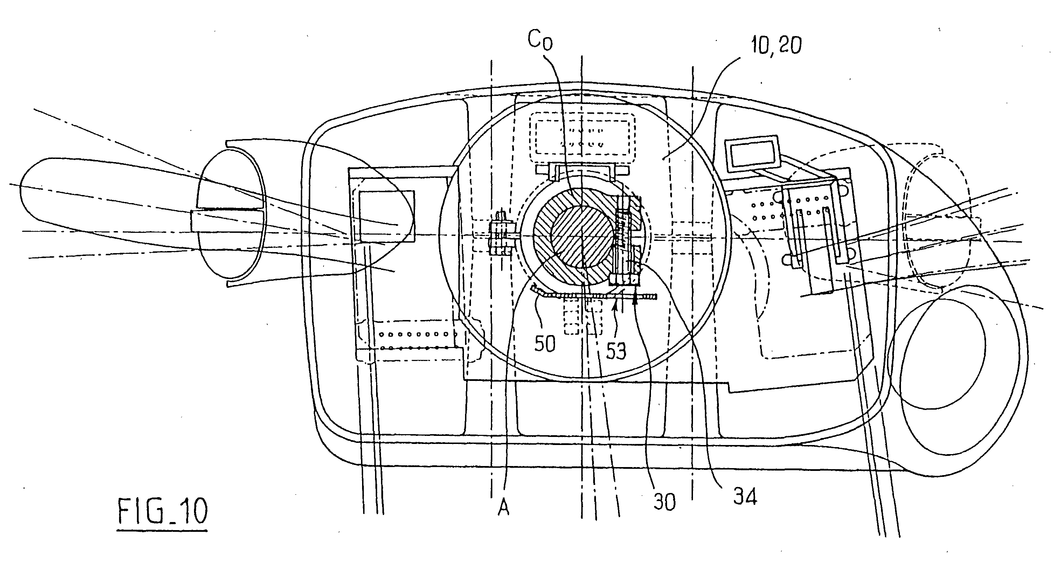

Les moyens de fixation 30 peuvent faire l'objet de nombreux modes de réalisation. Ils sont destinés à assurer la fixation du volant sur l'arbre de direction A, par exemple par serrage d'un collier Co lié au volant, sur l'arbre A, comme illustré sur les figures 9 et 10.

Ces moyens de fixation comportent une vis 34 adaptée pour être engagée dans deux pattes 32 et 60 du collier Co précité, pour serrer celui-ci.

La vis 34 est orientée radialement par rapport à l'axe du contacteur (et par rapport à la colonne de direction).

L'index 40 peut également faire l'objet de nombreuses variantes.

Il comprend un corps 42 engagé dans la rainure radiale de l'élément fixe 10 et complémentaire de la largeur de cette rainure de sorte que l'index 40 peut coulisser radialement dans la rainure.

L'index 40 comporte en outre, solidaire du corps 42, un doigt 44 engagé dans la gorge spiralée 22.

L'index 40 étant immobilisé à rotation par rapport à l'élément fixe 10, grâce à son engagement dans la rainure, le déplacement relatif doigt 44/gorge spiralée 22 induit lors d'une rotation relative entre l'élément fixe 10 et l'élément mobile 20, provoque un déplacement radial de l'index dans la rainure.

Le corps 42 possède en outre une gorge 43 d'orientation périphérique. La gorge 43 débouche de préférence en direction de l'élément fixe 10.

Le masque 50 peut également faire l'objet de nombreux modes de réalisation.

Ce masque 50 est adapté pour n'autoriser l'accès aux moyens de fixation 30, plus précisément à la vis 34, que dans une position relative unique prédéterminée entre l'élément fixe 10 et l'élément mobile 20.

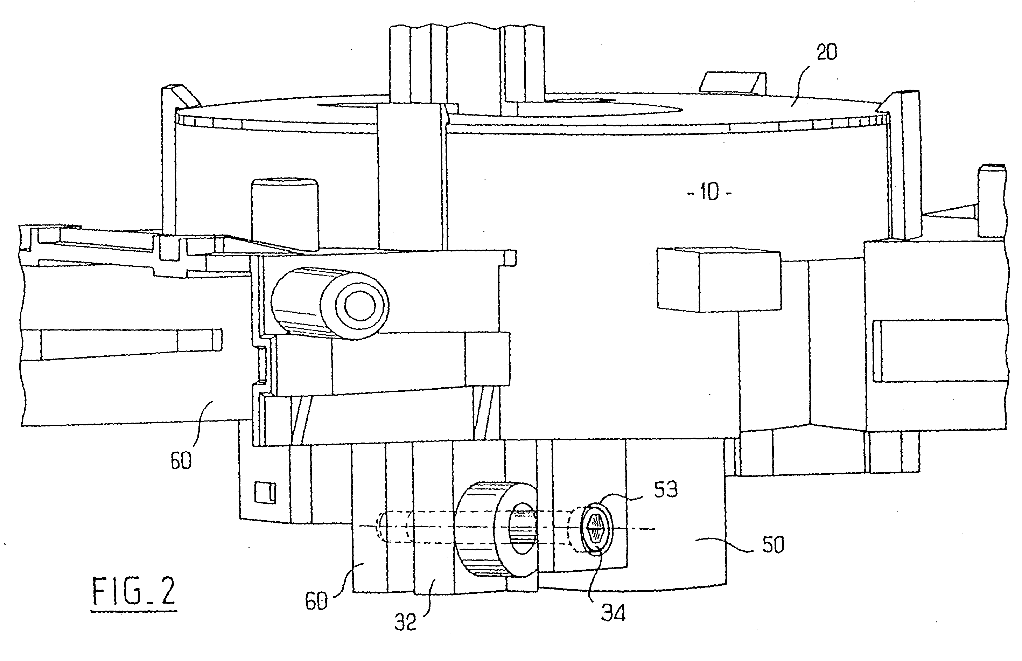

A cette fin le masque 50 comporte par exemple une toile en forme de secteur de cylindre 52 centré sur l'axe du contacteur, comportant un alésage 53. L'alésage 53 n'est coaxial des moyens de fixation 30 que lorsque l'élément fixe 10 et l'élément mobile 20 sont placés dans ladite position relative unique. L'alésage 53 est dimensionné de préférence pour autoriser l'engagement de la tête de la vis 34 lorsqu'il est centré sur celle-ci, comme illustré sur la figure 2.

Ainsi de préférence, comme illustré sur cette figure 2, le contacteur est livré de préférence avec la tête de la vis 34 insérée dans l'alésage 53 pour obtenir une position de livraison verrouillée, tant que la tête de vis 34 est placée dans cet alésage 53.

La toile 52 est solidaire d'une part d'une paroi 54 et d'autre part d'un pion 56.

La paroi 54 est formée également de préférence d'un secteur de cylindre centré sur l'axe du contacteur. L'épaisseur de la paroi 54 est complémentaire de la largeur de la gorge 43 formée dans l'index 40.

Le pion 56 quant à lui coopère avec la rampe 24.

Plus précisément, le pion 56 repose contre le fond du décrochement 25 lorsque le contacteur est placé en position de montage prédéterminée.

De plus, le masque 50 est guidé à translation sur l'élément fixe 10 parallèlement à l'axe du contacteur.

De préférence, le masque 50 est rappelé vers le fond de la gorge 43 par un moyen élastique non illustré sur les figures annexées pour simplifier l'illustration.

Ainsi en position de montage, correspondant de préférence à la position point milieu : le pion 56 repose contre le fond du décrochement 25, la paroi 54 est placée dans la gorge 43, et l'alésage 53 du masque 50 est aligné sur l'oeillet de la patte 32.

L'installateur a alors libre accès à la vis 34 pour assurer le montage ou le démontage du contacteur, et le montage ou le démontage du volant.

Si cette position correspond au point milieu, le doigt 44 de l'index 40 est placé en zone médiane de la gorge spiralée 22.

A partir de cette position de montage, le fonctionnement du contacteur est le suivant.

Lors d'une faible rotation de l'élément mobile 20, à partir de la position point milieu, la rampe 24 sollicite le pion 56 et par conséquent le masque 50 en éloignement de l'élément rotatif 20, par translation parallèlement à l'axe du contacteur. Suite à ce déplacement du masque 50, la paroi 54 est déplacée à l'extérieur de la gorge 43. Il en résulte que l'alésage 53 du masque n'est plus aligné sur la vis 34. L'accès à la vis 34 n'est alors plus possible et ceci pendant au moins un tour complet de rotation du contacteur, le pion 56 reposant sur le sommet de la rampe 24.

En outre, lorsque la rotation de l'élément mobile 20 est prolongée, la coopération définie entre l'index 40 et la gorge spiralée 22 entraine un déplacement radial de l'index, de sorte que la gorge 43 de l'index n'est plus alignée sur la paroi 54 du masque. L'amplitude de déplacement de l'index 40 est égale au produit du nombre de tours de rotation du contacteur par le pas de la gorge spiralée 22.

Il en résulte que lorsque le contacteur a effectué un nombre de tours entiers à partir de la position point milieu, le pion 56 est à nouveau placé en regard du décrochement 25. Cependant, le pion 56 ne peut pénétrer dans ce décrochement 25 du fait que la paroi 54 ne peut pénétrer dans la gorge 43 en raison de leurs désalignements. De ce fait, l'alésage 53 reste non centré sur la vis 34 pour interdire l'accès à celle-ci.

En conclusion, l'homme de l'art comprendra aisément que la structure proposée dans le cadre de la présente invention autorise une seule et unique position du contacteur permettant le montage et le démontage du volant à l'aide de la vis 34 et ceci sur la totalité de la rotation possible de l'élément mobile 20.

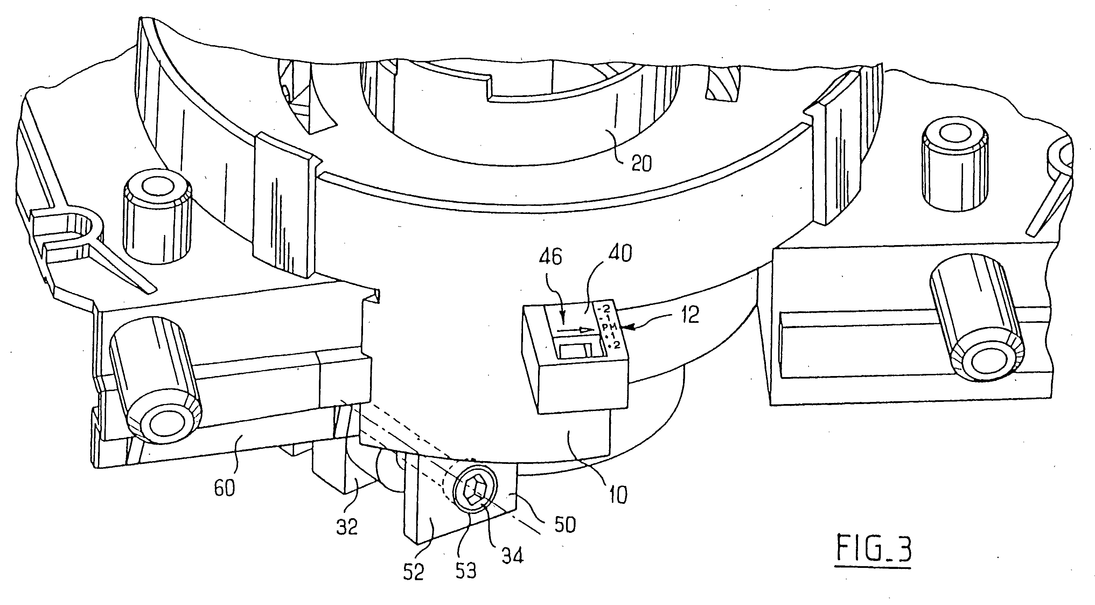

On notera que, comme cela est illustré sur les figures 3, 5 et 8, la structure de contacteur conforme à la présente invention permet en outre de visualiser aisément la position relative des éléments fixe et mobile 10, 20 par observation de la position radiale de l'index 40. Cette observation peut être facilitée en disposant un repère 46 sur l'index 40 en regard d'une échelle de valeurs 12 prévue sur l'élément fixe 10.

Comme illustré sur les figures annexées, l'échelle 12 peut être graduée directement en nombre de tours de rotation du contacteur en prévoyant un pas de graduation égal au déplacement radial de l'index 40 pour un tour de rotation du contacteur.

Bien entendu la présente invention n'est pas limitée au mode de réalisation particulier qui vient d'être décrit.

En particulier, l'invention n'est pas limitée au mode de réalisation spécifique précédemment décrit dans lequel la gorge spiralée 22 et la rainure radiale sont formées respectivement sur l'élément rotatif 20 et sur l'élément fixe 10. L'essentiel est simplement de prévoir la gorge spiralée 22 et la rainure radiale assurant le déplacement de l'index 40 sur deux pièces du contacteur susceptibles de rotation relative.

Ainsi, à titre d'exemples non limitatifs, on peut prévoir la rainure radiale sur l'élément fixe 10 et la gorge spiralée 22 sur un élément intercalé entre l'élément fixe 10 et l'élément rotatif 20 et lié à rotation au moins indirectement avec ce dernier, ou encore prévoir la rainure radiale sur un tel élément intermédiaire et la gorge spiralée sur l'élément rotatif 20.

La structure générale d'un tel contacteur électrique rotatif comprenant un élément intermédiaire est bien connue de l'homme de l'art et ne sera donc pas décrite dans le détail par la suite.

Dans la description qui précède les moyens de fixation 30 contrôlés par le masque 50 sont adaptés pour fixer le volant sur l'arbre de direction A.

Cependant, en variante, on peut prévoir un masque auxiliaire similaire au masque 50 précité, adapté pour n'autoriser l'accès aux moyens de fixation du contacteur sur un support que dans une position unique prédéterminée dudit contacteur.

Le premier mode de réalisation illustré sur les figures 1 à 10 est conçu pour contrôler des moyens 30 de fixation de volant orientés radialement par rapport à l'axe de la colonne de direction.

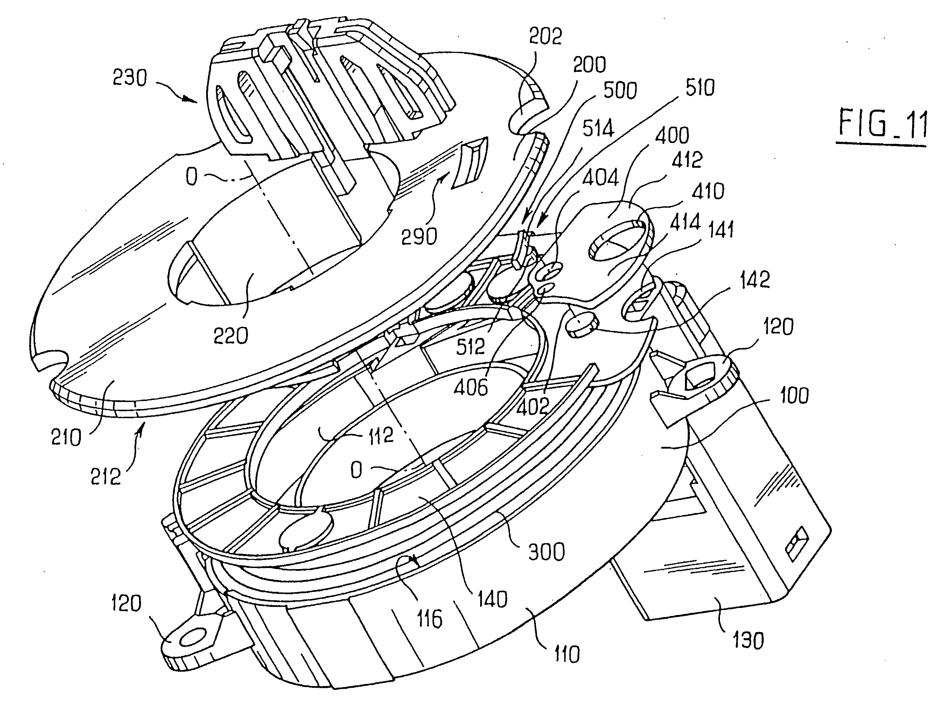

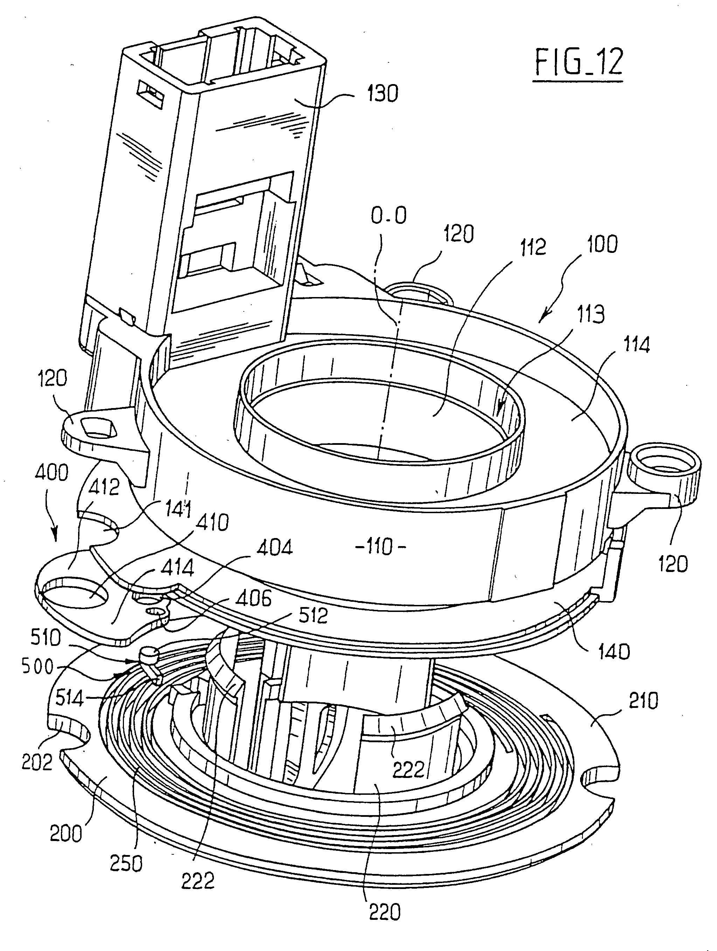

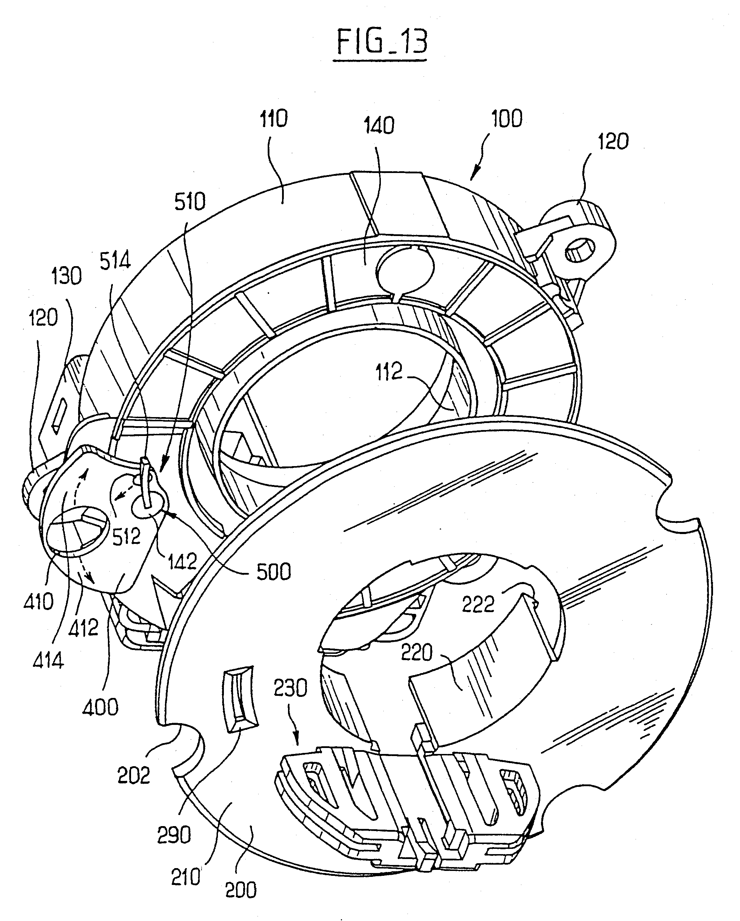

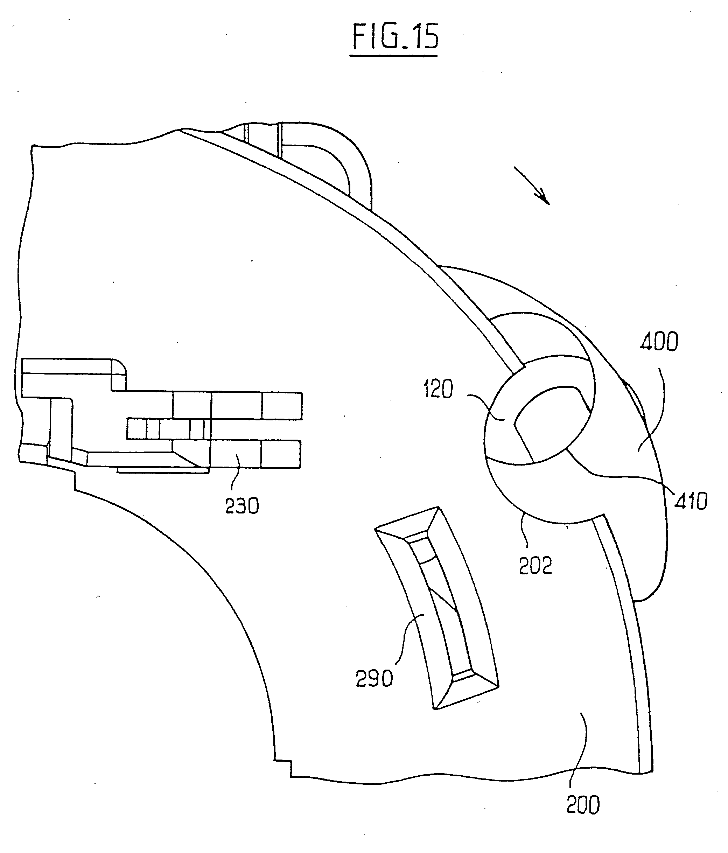

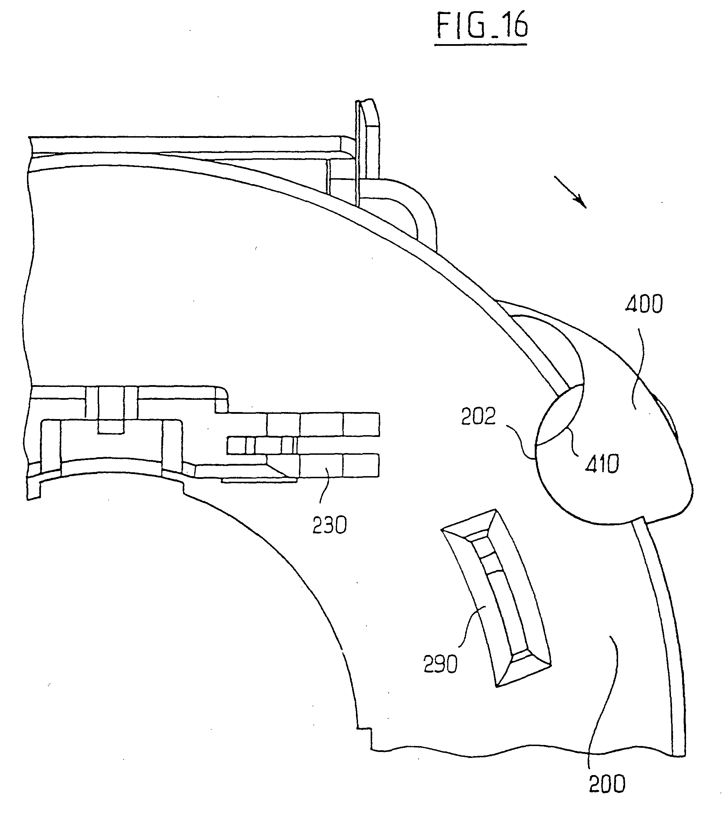

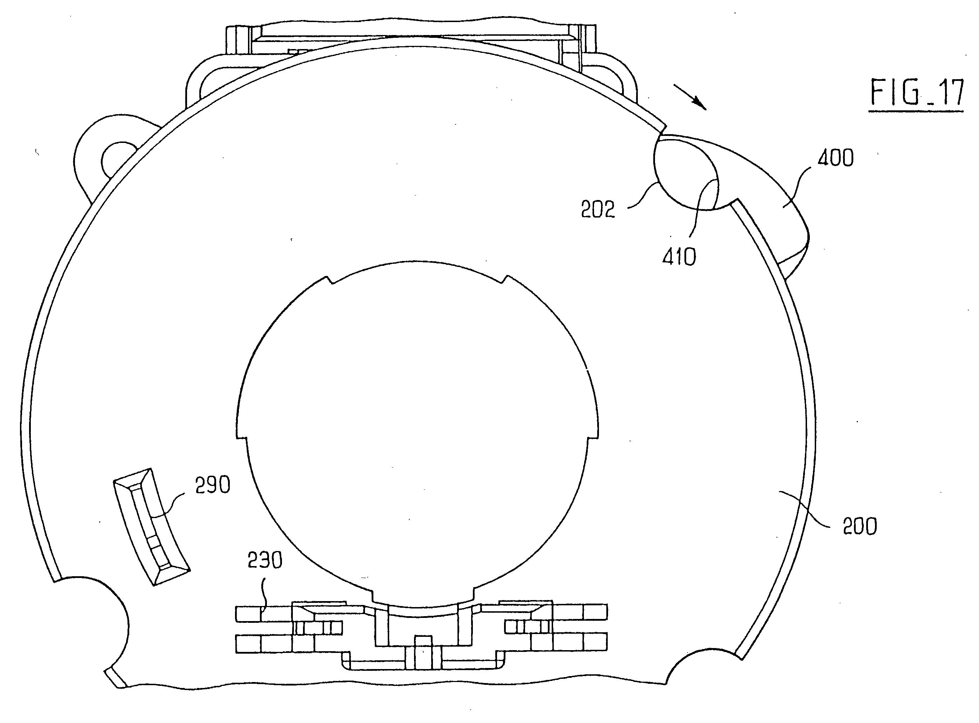

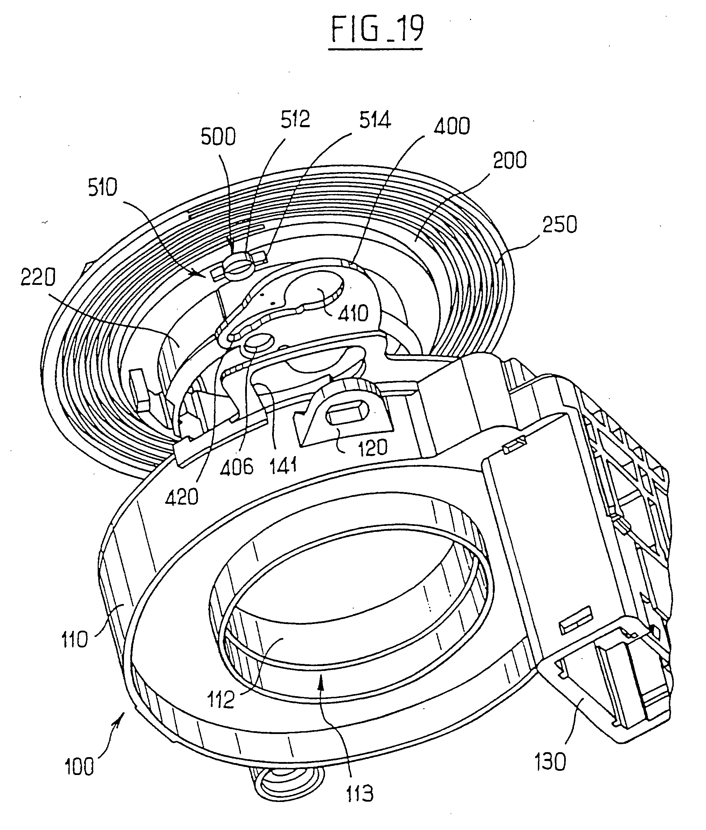

On va maintenant décrire les modes de réalisation de l'ensemble conforme à la présente invention illustrés sur les figures 11 à 24, conçus pour contrôler des moyens de fixation de volant orientés parallèlement à l'axe de la colonne de direction. Ces moyens de fixation peuvent agir par exemple par déplacement axial d'un coin assurant le serrage d'un collier sur l'arbre de direction.

On retrouve sur les figures 11 à 24 un contacteur électrique tournant qui comprend essentiellement deux éléments de boîtier 100, 200 susceptibles de rotation relative, par exemple un boîtier fixe 100 et un couvercle rotatif 200, ou inversement un élément mobile 100 et un élément fixe 200, un conducteur souple 300, un volet de détrompage 400 et des moyens d'entraînement 500.

Le boîtier fixe 100 peut faire l'objet de nombreux modes de réalisation.

Il est formé, de préférence, par moulage en matière plastique.

Selon le mode de réalisation particulier et non limitatif représenté sur les figures annexées, le boîtier 100 comprend essentiellement deux parois circulaires concentriques 110, 112 reliées entre elles par une paroi de base 114 en forme de couronne. Les parois 110, 112 et 114 précitées, délimitent ainsi une chambre annulaire 116 apte à contenir le conducteur 300.

La paroi cylindrique externe 110 est pourvue de préférence de points de fixation 120 formés par exemple d'oeillets comme représenté sur les figures annexées.

En outre, la paroi cylindrique extérieure 110 est munie, de préférence sur sa périphérie extérieure, d'un corps de connecteur 130. Ce corps de connecteur 130 comprend des contacts électriques reliés respectivement à des pistes du conducteur souple 300. Le connecteur 130 s'étend avantageusement axialement, c'est-à-dire dans une direction générale parallèle à l'axe des parois 110, 112.

Selon le mode de réalisation préférentiel représenté sur les figures annexées, la cage cylindrique délimitée par les parois 110, 112 et 114 est complétée par une entretoise 140 en forme de couronne. Cette entretoise 140 est liée à rotation avec le boîtier 100. Elle obture partiellement le contour d'ouverture de la chambre annulaire 116 précitée.

L'entretoise 140 sert de plaque intermédiaire entre le boitier formé par les parois 110, 112, 114 et le couvercle 200. Elle peut assurer par ailleurs diverses fonctions telles que support mécanique, support de contact électrique et/ou protection.

Le couvercle 200 comprend essentiellement une paroi 210 plane en forme de couronne, coaxiale au boîtier 100. La paroi 210 est munie sur sa périphérie interne d'un fût cylindrique 220, ou de différents segments cylindriques équi-répartis autour de son axe, comme représenté sur les figures annexées, engagé dans l'espace interne du boîtier 100. Ainsi le couvercle 200 est monté et guidé à rotation sur le boîtier 100.

Le couvercle 200 est retenu à translation sur le boîtier 100 par tout moyen approprié, par exemple à l'aide de dents 222 en saillie sur l'extrémité du fût 220 ou des segments composants ce fût 220, lesquelles dents 222 viennent en prise avec un décrochement 113 formé sur la paroi cylindrique 112.

De préférence, le couvercle 200 est muni également d'un corps de connecteur 230 au niveau de sa périphérie interne, sur sa face opposée au fût 220. Le corps de connecteur 230 s'étend dans une direction axiale, c'est-à-dire parallèlement à l'axe du couvercle 200 et du boîtier 100.

Le couvercle 200 est ainsi placé sur la face de l'entretoise 140 opposée à la chambre annulaire 116.

Sur sa face 212 adjacente à cette entretoise 140, le couvercle 200 est muni, selon la variante de réalisation préférentielle de l'invention, d'une rainure spiralée 250, c'est-à-dire une rainure en spirale centrée sur un axe coaxial à l'axe du boîtier 100 et du couvercle 200.

Le volet de détrompage 400 a pour fonction d'imposer l'accès aux moyens de fixation du volant dans une position d'assemblage ou d'installation unique du contacteur sur une platine support, correspondant à une position relative unique entre les deux éléments 100 et 200 composant respectivement le boîtier et le couvercle rotatif.

Cette platine support peut être formée d'une platine fixe liée aux véhicules, ou encore du volant, ou d'un élément lié en rotation au volant.

Selon le mode de réalisation préférentiel représenté sur les figures annexées, le volet de détrompage 400 est monté à pivotement sur l'entretoise 140.

Plus précisément, le volet de détrompage 400 est monté à pivotement sur l'entretoise 140 autour d'un axe 402 parallèle à l'axe de rotation 0-0 des deux éléments 100/200 et décalé par rapport à cet axe O-O.

A cette fin, le volet de détrompage 400 possède un trou cylindrique 404 engagé sur un tourillon complémentaire 142 solidaire de l'entretoise 140.

Bien entendu, la disposition inverse est possible, c'est-à-dire que le volet de détrompage 400 peut posséder un tourillon engagé dans un trou cylindrique complémentaire formé dans l'entretoise 140.

Comme on l'a mentionné précédemment, le volet de détrompage 400 est associé à des moyens 500 d'entraînement à déplacement, actionnés par la rotation relative des deux éléments 100/200.

Selon le mode de réalisation préférentiel représenté sur les figures annexées, ces moyens d'entraînement 500 comprennent un index 510 coopérant avec la rainure spiralée 250 précitée ménagée dans le couvercle 200.

Plus précisément, l'index 510 comprend un tourillon cylindrique 512 solidaire d'un segment de spirale 514.

Le tourillon 512 est engagé dans un trou cylindrique complémentaire 406 formé dans le volet de détrompage 400. Le trou 406 est excentré par rapport au trou 404 précité.

Le segment de spirale 514 solidaire du tourillon 512 est quant à lui engagé dans la rainure spiralée 250.

Cette rainure spiralée 250 comprend un nombre de tours égal au nombre de tours de rotation souhaité pour le volant du véhicule, c'est-à-dire le nombre de tours nécessaire entre le boîtier 100 et le couvercle 200.

Les extrémités respectives de la rainure spiralée 250 forment par ailleurs deux butées pour l'index 510.

Le volet 400 comprend en outre de préférence un évidement 410, par exemple cylindrique, positionné par rapport à un oeillet 120 lié à la paroi cylindrique externe 110 du boîtier 100, pour être placé en regard de cet oeillet 120 uniquement lorsque les deux éléments 100, 200 sont dans ladite position relative unique.

Le fonctionnement des moyens de détrompage conformes à la présente invention est essentiellement le suivant.

Lorsque les deux éléments 100, 200 sont entraînés à rotation relative autour de l'axe O-O, l'index 510 engagé par son segment 514 dans la rainure spiralée 250 est déplacé en synchronisme.

Il en résulte qu'en raison de l'engagement défini entre le tourillon 512 de l'index 510 et le trou 406 du volet 400, ce volet de détrompage 400 est également déplacé à pivotement en synchronisme autour de son axe 402.

Il existe donc une seule position d'alignement entre l'évidement 410 du volet de détrompage 400 et l'oeillet de fixation 120 assurant l'accès aux moyens de fixation du volant, en fonction de la position relative du boîtier 100 et du couvercle rotatif 200.

En conséquence, il existe également une seule position de montage ou de démontage possible du volant ct du contacteur sur sa platine support.

Ainsi, la présente invention permet de monter et démonter le volant dans une position unique prédéterminée et le contacteur sur sa platine support, sans risque de perte de la position point milieu du contacteur. L'invention facilite ainsi les opérations de maintenance par rapport aux systèmes proposés antérieurement.

De préférence, la position dite relative unique entre les deux éléments 100, 200 correspond à la position point milieu du contacteur. Cependant, en variante il peut s'agir d'une autre position relative, sous réserve que celle-ci soit connue avec précision.

La dimension de l'évidement 410 formée dans le volet de détrompage 400 est de préférence adaptée pour interdire le passage d'une des vis de fixation dans l'oeillet 120, ou encore des moyens de vissage eux-mêmes, lorsque l'axe de l'évidement 410 n'est pas pratiquement aligné avec l'axe de l'oeillet 120.

De préférence, le volet de détrompage 400 est muni de joues latérales 412, 414 respectivement de part et d'autre de l'évidement 410, lesquelles joues 412, 414 sont superposées à l'oeillet de fixation 120 lorsque les éléments 100, 200 sont éloignés de ladite position relative unique autorisant le montage du contacteur.

De préférence, le contacteur comprend également des découpes 202, 141, débouchant radialement sur l'extérieur du couvercle 200 et du boîtier 100, par exemple sur l'entretoise 140, lesquelles découpes 202, 141 sont conçues pour être placées en regard de l'oeillet de fixation 120.

Plus précisément, la découpe 141 formée sur l'entretoise 140 liée à rotation avec le boîtier 100 est placée en permanence en regard de l'oeillet de fixation 120.

En revanche, la découpe 202 formée sur le couvercle 200 n'est alignée sur l'oeillet de fixation 120 qu'une fois par rotation du couvercle 200 sur 360°.

Selon une autre caractéristique avantageuse de la présente invention, le couvercle 200 généralement opaque est muni en outre d'une fenêtre 290.

Cette fenêtre 290 est dimensionnée et positionnée sur le couvercle 200 de telle sorte qu'elle soit rigoureusement alignée avec le segment de spirale 514 lié à l'index 510 lorsque les éléments 100, 200 du contacteur sont placés dans une position prédéterminée, avantageusement la position point milieu.

L'homme de l'art comprendra aisément que l'index 514 n'est aligné sur la fenêtre 290 que dans une position relative unique entre les éléments 100 et 200.

Ainsi la présente invention permet de garantir la position d'installation du contacteur sur la colonne de direction et/ou sur le volant.

La fenêtre 290 peut être formée d'un évidement ou lumière dans le couvercle opaque 200 ou encore d'un hublot en matériau optiquement transparent, par exemple en matière plastique.

Le couvercle 200 et l'entretoise 140, ainsi que le volet de détrompage 400 et l'index 510 sont formés avantageusement par moulage en matière plastique comme le boîtier 100.

La fenêtre 290 formée dans le couvercle 200 présente de préférence une section en forme de secteur de couronne de même contour que le segment 514.

Le conducteur souple 300 peut faire l'objet de nombreux modes de réalisation. Il peut s'agir par exemple d'un faisceau de fils électriquement conducteurs isolés, ou encore de préférence d'un circuit imprimé ou d'un film plastique souple pourvu de plusieurs pistes métallisées parallèles.

Les extrémités du conducteur souple 300 sont reliées respectivement aux contacts électriques placés dans le corps de connecteur 130 et aux contacts électriques placés dans le corps de connecteur 230.

Bien entendu on peut prévoir à l'inverse des dispositions précédemment décrites un volet de détrompage 400 monté à pivotement sur le couvercle 200 et une glissière en spirale formée sur l'entretoise 140 ou le boîtier 100 pour recevoir l'index 510.

Le fonctionnement du contacteur conforme à la présente invention est pour le reste classique.

Lorsque le volant du véhicule automobile est entraîné en rotation autour de son axe, le couvercle 200 est entrainé à rotation par rapport au boîtier 100.

Au cours de ce pivotement, les spires du conducteur souple 300 se desserrent ou se resserrent en fonction du sens du rotation du volant, mais le conducteur 300 assure en permanence une liaison électrique entre les contacts intégrés aux connecteurs 130 et 230. Ainsi, le conducteur 300 assure une liaison électrique permanente entre des modules liés au volant et des modules liés à la colonne de direction ou d'une façon plus générale au véhicule.

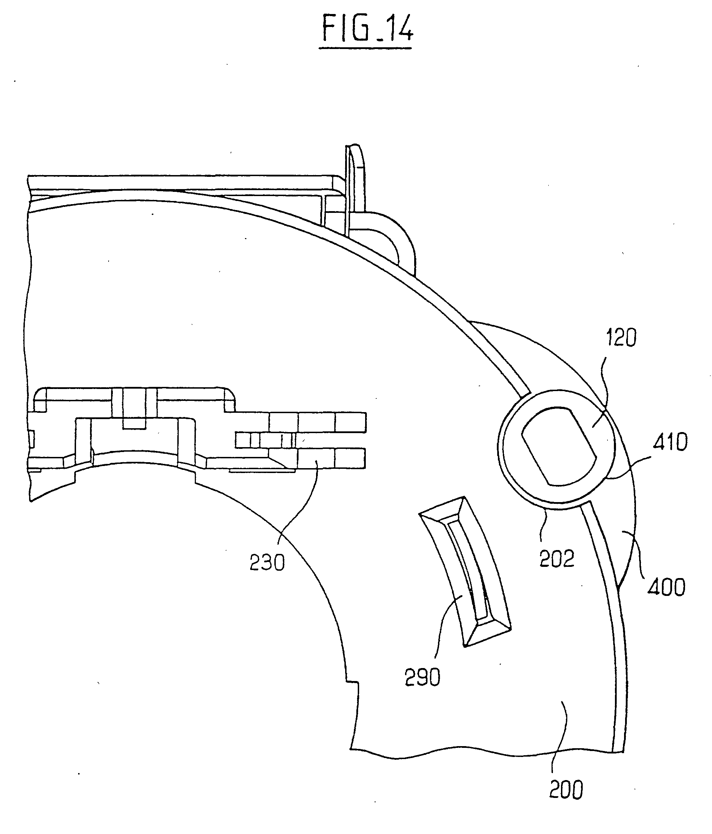

On a représenté sur les figures 14 et suivantes la position du volet de détrompage 400 par rapport au boîtier 100, respectivement en position point milieu du contacteur, après un tour de rotation du couvercle 200, après deux tours de rotation du couvercle 200, et après 2,5 tours de rotation du même couvercle 200. Les figures 14 et suivantes montrent clairement que le volet de détrompage 400 masque au moins partiellement l'oeillet de fixation 120 dès lors que le contacteur est écarté de sa position point milieu.

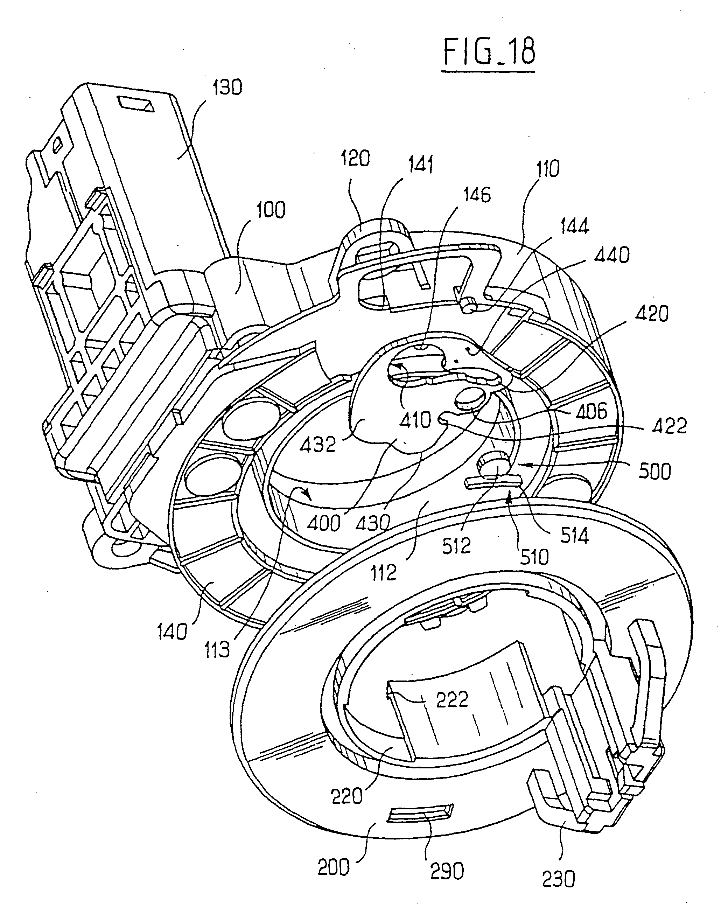

On va maintenant décrire une variante de réalisation de l'invention représentée sur les figures 18 à 24.

On retrouve sur ces figures 18 à 24 un contacteur électrique tournant comprenant un boîtier fixe 100, un couvercle rotatif 200, un conducteur souple 300, un volet de détrompage 400 et des moyens d'entraînement 500. Pour cette raison, la structure générale de la variante illustrée sur les figures 18 à 24 ne sera pas décrite dans le détail par la suite.

On s'attachera essentiellement à décrire les différences structurelles existant entre le volet de détrompage 400 représenté sur les figures 18 à 24 et celui du mode de réalisation représenté sur les figures 11 à 17, ainsi que les différences entre les moyens d'entraînement 500 de ces volets de détrompage 400.

Les éléments de la variante de réalisation représentée sur les figures 18 à 24 similaires à des moyens représentés et décrits précédemment en regard des figures 11 à 17 porteront des références numériques identiques.

Selon la variante de réalisation représentée sur les figures 18 à 24, l'entretoise 140 servant de support d'index 510, et lice en rotation au boîtier 100 est munie de deux tourillons 144, 146 et d'un dégagement 141 implanté au droit de la fixation choisie 120.

Le volet de détrompage 400 est muni de deux zones guide 420, 422 coopérant respectivement avec les tourillons 144, 146, d'un trou cylindrique 406 le liant à l'index 510, en rotation, d'un évidement 410 aligné dans la position dite position relative unique avec le dégagement 141 et la fixation choisie 120, d'une structure en forme de came 430 en saillie sur sa périphérie extérieure, d'une joue 432 adjacente à l'évidement 410 et d'un orifice 440 assurant la fixation d'une extrémité d'un ressort de rappel (non représenté sur les figures pour simplifier l'illustration).

La première zone guide 420 coopérant avec le tourillon 144, est formée d'une gorge incurvée qui débouche dans l'évidement 410.

La seconde zone guide 422 qui coopère avec le tourillon 146, est formée d'une gorge également incurvée qui débouche sur l'extérieur du volet 400, par exemple entre la came 430 et le trou 406.

La largeur des gorges 420, 422 est adaptée au diamètre extérieur des tourillons 144, 146, pour autoriser un déplacement relatif entre ceux-ci.

La gorge 420 est centrée sur un axe qui coïncide avec le centre de la gorge 422, plus précisément avec l'axe du tourillon 146 lorsque celui-ci est placé dans ladite gorge 422.

De même de préférence, la gorge 422 est centrée sur l'axe du tourillon 144 lorsque celui-ci est placé dans l'extrémité de la gorge 420 la plus éloignée de l'évidement 410.

De façon comparable au mode de réalisation représenté sur les figures 11 à 17, l'index 510 comprend un tourillon cylindrique 512 engagé avec liberté de pivotement relatif dans le trou 406 du volet de détrompage 400 et un segment de spirale 514 engagé dans la rainure spiralée 250 du couvercle 200.

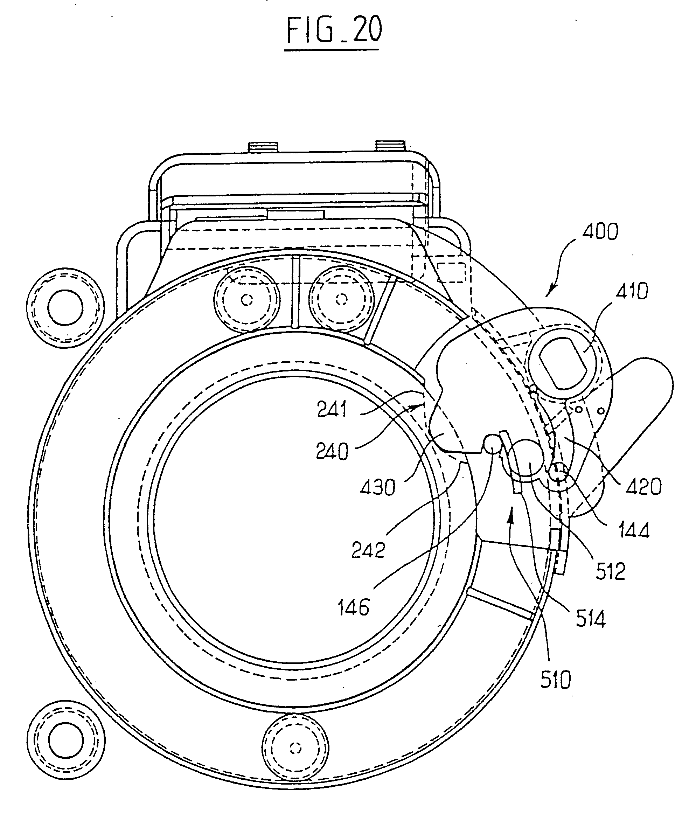

Le couvercle 200 est muni selon la variante de réalisation des figures 18 à 24, sur la surface extérieure de son fût cylindrique 220, d'une cavité ou logement 240 recevant la structure de came 430 en position de montage du contacteur qui correspond de préférence à la position point milieu du contacteur. L'engagement de la structure de came 430 dans la cavité 240 est illustré notamment sur la figure 20.

Un ressort de rappel en prise avec l'entretoise 140 et le volet de détrompage 400 (lequel ressort n'est pas illustré sur les figures annexées pour simplifier l'illustration) sollicite le volet de détrompage 400 dans le sens contraire des aiguilles d'une montre en référence aux figures 20 à 24.

Le fonctionnement de la variante de réalisation représenté sur les figures 18 à 24, est essentiellement le suivant.

En position point milieu, l'index 510 est positionné par sa forme spiralée 514 dans la spire médiane de la rainure spiralée 250 du couvercle 200. La came 430 solidaire du volet de détrompage 400 est engagée dans le logement 240 du couvercle 200. L'évidement 410 est aligné sur la fixation 120.

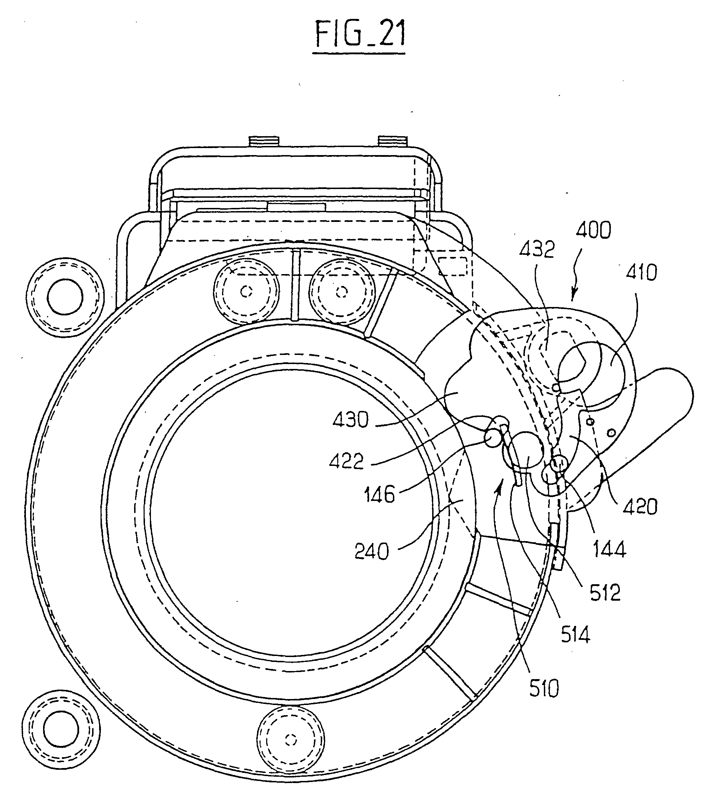

Comme on le voit à l'examen comparé des figures 20 et 21, lors d'une faible rotation relative du couvercle 200 par rapport au boitier 100 (par exemple plus ou moins 30°) à partir de cette position point milieu, la structure de came 430 solidaire du volet de détrompage 400 glisse sur les flancs inclinés 241, 242 du logement 240, de sorte que la structure de came 430 sort de ce logement 240 et le volet de détrompage 400 pivote (dans le sens des aiguilles d'une montre en référence aux figures 20 à 24) autour de l'axe du tourillon 512. La structure de came 430 prend alors appui sur la surface extérieure du fût 220. Suite à cette rotation, l'évidement 410 est désaligné de la fixation 120 et masque l'accès à cette dernière.

On note à l'examen comparé des figures 20 et 21 que ce pivotement du volet de détrompage 400 autour de l'axe du tourillon 512 entraîne un déplacement relatif entre les tourillons 144, 146, et les gorges 420, 422, associées.

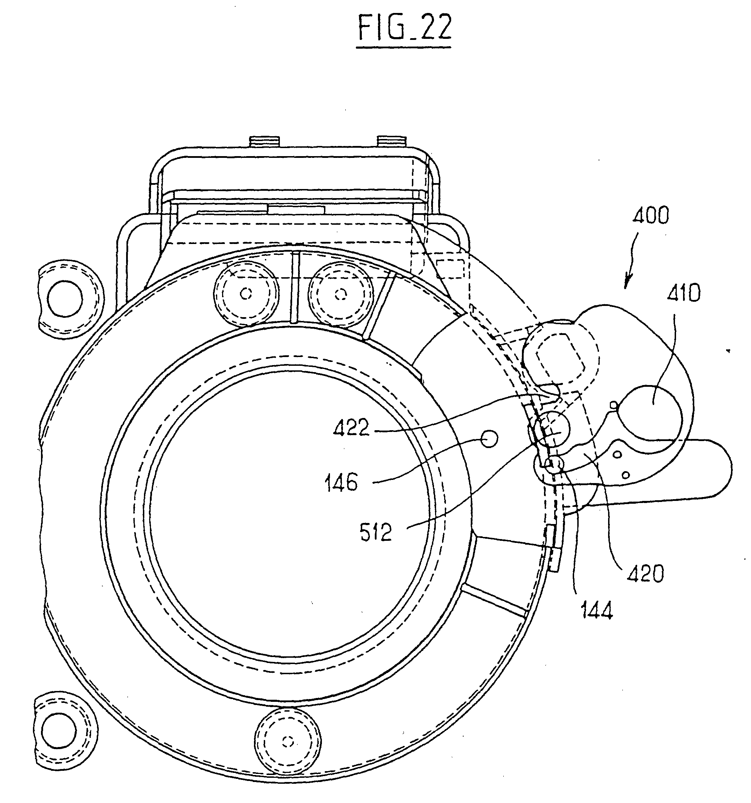

Lorsque la rotation relative entre le couvercle 200 et le boitier 100 est accentuée, jusqu'à un tour, le volet de détrompage 400 reste en appui contre le fût 220 par sa structure de came 430. Cependant, l'index 512 se déplace grâce à l'engagement du segment de spirale 514 dans la rainure spiralée 250 du couvercle. Ce déplacement de l'index 510 provoque un mouvement complexe, généralement radialement vers l'extérieur, du volet de détrompage 400, jusqu'à ce que le tourillon 144 vienne en appui contre le fond de la gorge 420 le plus éloigné de l'évidement 410. Lors d'une rotation supérieure (rotation relative entre le couvercle 200 et le boitier 100 supérieure à un tour), l'index 510 entraîne le volet de détrompage 400 à rotation autour de l'axe du tourillon 144 (voir figure 22).

L'homme de l'art comprendra que grâce à ce principe, d'une part la coopération définie entre la came 430 et le logement 240 entraîne un déplacement rapide du volet de détrompage 400 avec une faible course relative entre le couvercle 200 et le boîtier 100 et, d'autre part grâce au basculement ultérieur du volet de détrompage 400 imposé par l'index 510, la came 430 ne peut retomber dans le logement 240 au passage du premier tour.

On a représenté sur la figure 22, le volet de détrompage 400 dans la position occupée après rotation maximum entre le couvercle 200 et le boîtier 100.

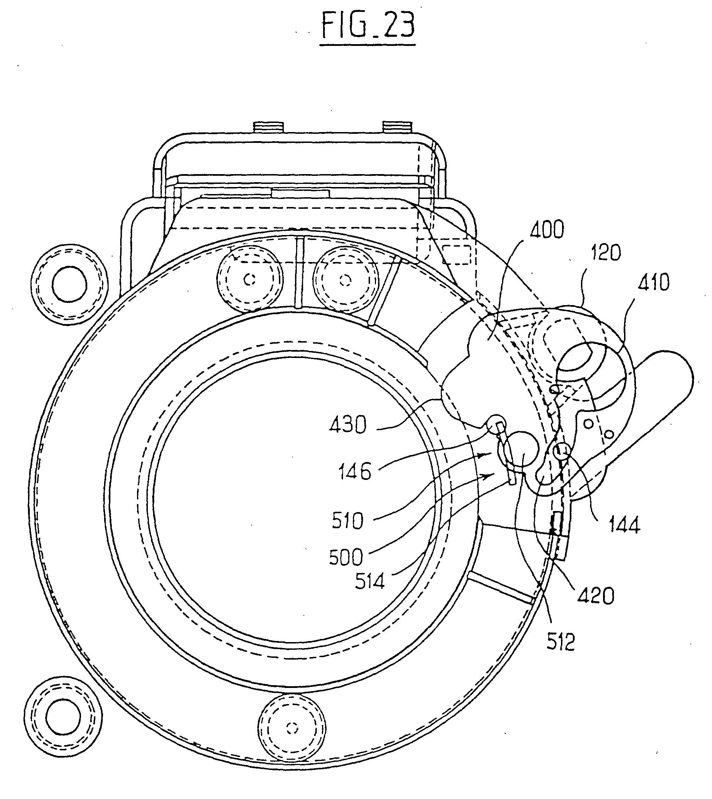

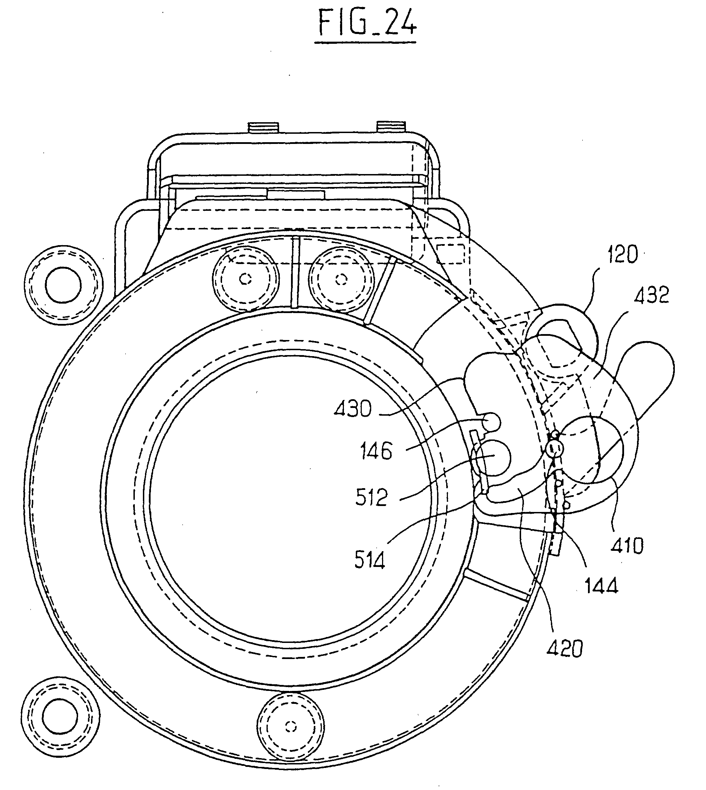

Lors d'une rotation en sens inverse du couvercle 200 par rapport au boîtier 100, à partir de la position point milieu, un effet identique est obtenu, le volet de détrompage 400 pivotant celte fois autour de l'axe du tourillon 146, avec déplacement simultané du tourillon 144 dans la gorge 420, comme on l'a représenté sur les figures 23 et 24 respectivement à un tour de rotation relative entre le couvercle 200 et le boîtier 100, et à rotation maximum entre ceux-ci.

On notera qu'à partir d'une position point milieu, quel que soit le sens de rotation du couvercle 200 par rapport au boîtier, le volet de détrompage 400 tourne toujours dans le même sens.

L'homme de l'art comprendra que la variante de réalisation représentée sur les figures 18 à 24 permet de réduire les dimensions extérieures du contacteur à sécurité de recouvrement similaire des moyens de fixation 120.

Ainsi, la variante de réalisation représentée sur les figures 18 à 24 facilite l'intégration du contacteur dans un bloc ou platine support.

Pour le reste, la variante de réalisation du contacteur représentée sur les figures 18 à 24 autorise les mêmes variantes que celles envisagées pour le mode de réalisation représenté sur les figures 11 à 17.

En particulier, l'index 510 peut être adapté pour étre aligné sur une fenêtre de visualisation 290 en point milieu du contacteur ; et volet de détrompage 400 peut être monté à pivotement sur le couvercle 200, la glissière en spirale étant formée sur l'entretoise 140 ou le boîtier 100 pour recevoir l'index 510.

Bien entendu la présente invention n'est pas limitée au mode de réalisation particulier qui vient d'être décrit.

Ainsi par exemple, on peut prévoir des variantes de réalisation selon lesquelles la fenêtre de détection 290 est formée sur la partie fixe, c'est-à-dire sur le corps de boîtier 100 ou encore sur l'entretoise 140, sous réserve que cette fenêtre soit observable par l'utilisateur, et non point sur la partie mobile ou couvercle 200.

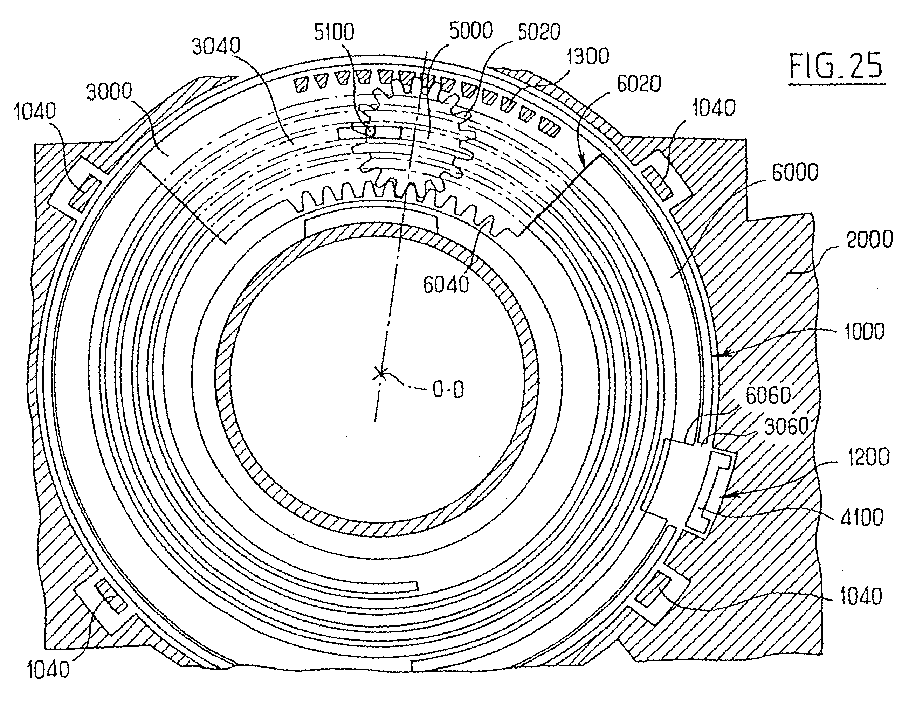

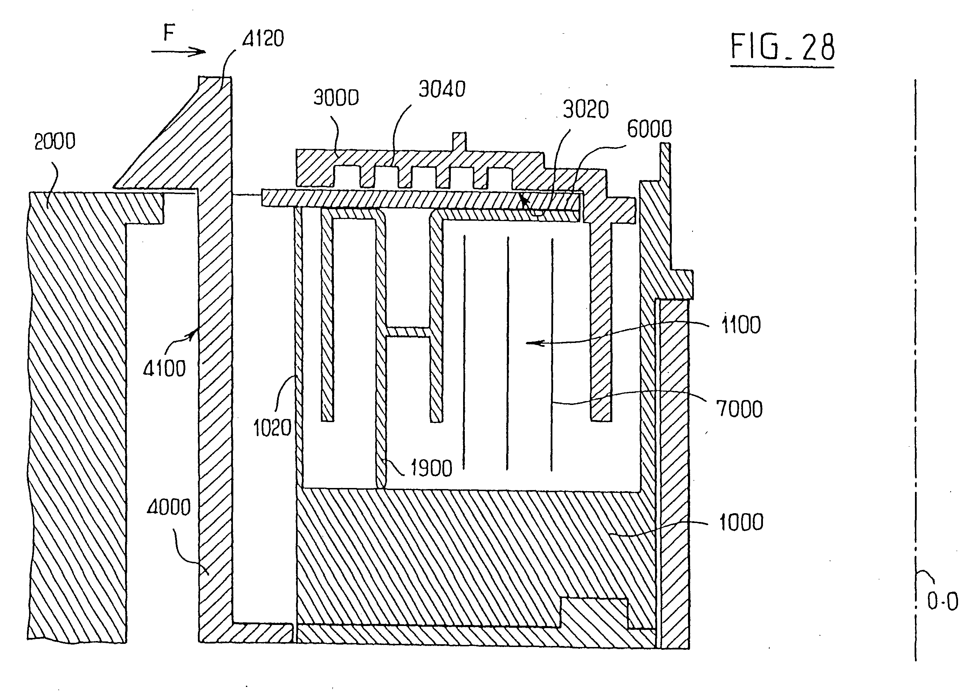

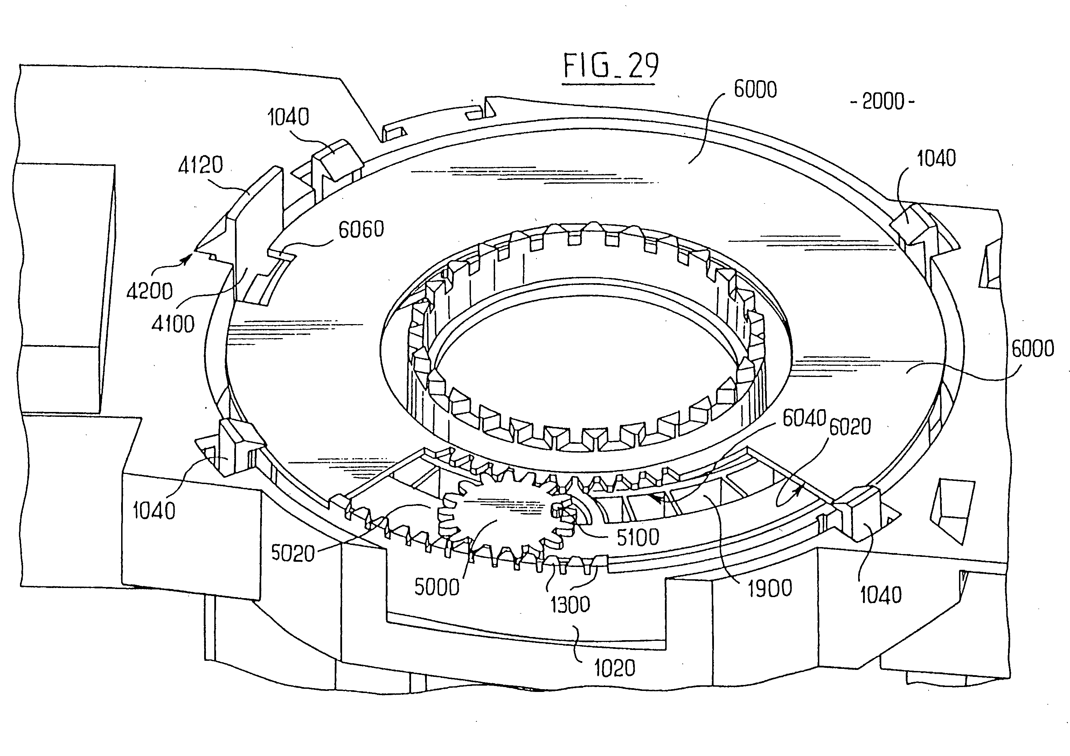

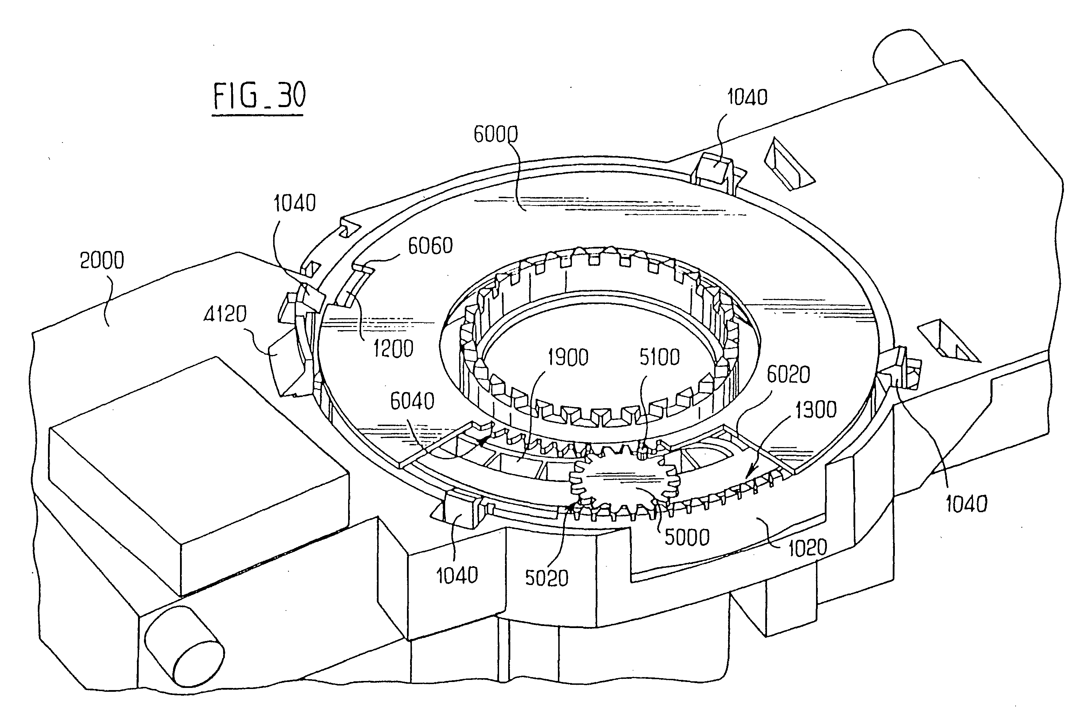

On va maintenant décrire le mode de réalisation illustré sur les figures 25 à 30.

Ce mode de réalisation est conçu pour imposer la montabilité et la démontabilité en position roues droites, d'un ensemble de commande fixé sur un volant et intégrant de préférence une fonction contacteur tournant, encliqueté sur un élément du haut de colonne et ceci en une seule position et quelque soit le nombre de tours volant (sur l'exemple cinq tours).

Le système illustré sur les figures 25 à 30 comprend :
- un élément de boîtier fixe 1000,
- une platine support 2000 sur laquelle est fixé l'élément de boîtier fixe 1000,
- un élément de boîtier mobile 3000, formant couvercle, conçu pour être lié à rotation avec le volant, et ainsi être susceptible de rotation autour d'un axe O-O par rapport à l'élément 1000,
- un élément 4000 solidaire du haut de la colonne de direction et qui comporte au moins une patte d'encliquetage souple 4100,
- un pignon 5000, et
- un masque 6000.

Les deux éléments de boîtier 1000, 3000 définissent en combinaison une chambre annulaire 1100 centrée sur l'axe O-O, dans laquelle est placé un élément 7000 électriquement conducteur souple dont les extrémités sont fixées respectivement sur l'élément fixe 1000 et sur l'élément rotatif 3000.

L'organe conducteur électrique souple 7000 peut faire l'objet de divers modes de réalisation comme décrit précédemment pour les organes Cet 300.

L'organe 7000 est enroulé en spirale dans la chambre annulaire 1100 entre les éléments 1000 et 3000.

Le cas échéant, il peut être retourné sur un élément intermédiaire 1900 monté libre de rotation dans la chambre annulaire 1100, tel que décrit dans les demandes de brevet français déposées le 23 Septembre 1996 sous le numéro d'enregistrement national 96 11557 et le 3 Mars 1995 sous le numéro d'enregistrement national 95 02491 (FR-A-2 731 299).

La structure de base du contacteur constituée de l'élément de boîtier fixe 1000 et de l'élément de boîtier mobile 3000, classique en elle-mème et bien connue de l'homme de l'art ne sera pas décrite dans le détail par la suite.

L'élément de boîtier 1000 est fixé sur la platine 2000 par tout moyen approprié.

L'élément de boîtier 1000 et/ou la platine 2000 qui lui est liée possède au moins une encoche de clipsage 1200 et des dentures 1300.

Selon le mode de réalisation illustré sur les figures 25 à 30, l'encoche 1200 est formée d'un passage parallèle à l'axe de rotation O-O du contacteur, situé entre la platine 2000 et l'élément de boîtier 1000.

Le nombre d'encoches 1200 est égal au nombre de pattes de clipsage 4100 formées sur l'élément 4000. Il en est de même pour leur disposition.

Chaque encoche 1200 est ainsi conçue pour recevoir une patte 4100, laquelle s'étend globalement parallèlement à l'axe de rotation O-O du contacteur.

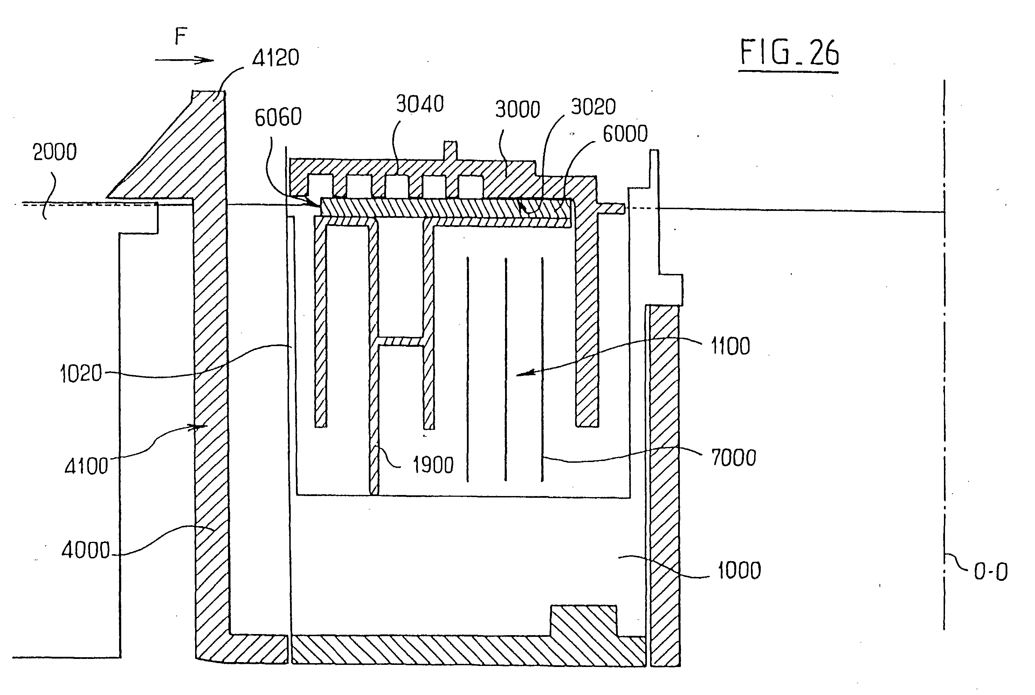

Comme on le voit sur les figures 26 et 28 à 30 après avoir franchi ladite encoche 1200, la denture d'extrémité élargie 4120 de la patte 4100 vient prendre élastiquement position en regard de la platine 2000 pour retenir celle-ci.

Selon le mode de réalisation préférentiel illustré sur les figures annexées, les dentures 1300 sont formées sur un secteur de couronne sur la surface interne d'une jupe cylindrique 1020 appartenant à l'élément de boîtier fixe 1000 et définissant l'enveloppe externe de la chambre annulaire 1100.

Le couvercle 3000 est formé d'un disque plan qui s'étend transversalement à l'axe de rotation O-O. Il est maintenu sur l'élément de boîtier fixe 1000 et guidé à rotation autour de l'axe O-O par des pattes élastiques à extrémités élargies 1040 solidaires de l'élément 1000. Le couvercle 3000 a un diamètre sensiblement égal au diamètre de la jupe 1020.

Le couvercle 3000 est muni sur sa surface interne 3020 d'une gorge spiralée 3040 centrée sur l'axe O-O. En outre le couvercle 3000 comporte une encoche 3060 qui débouche sur sa périphérie externe.

Le masque 6000 est formé d'une couronne adjacente au couvercle 3000, transversale à l'axe de rotation O-O, centrée sur cet axe O-O, et susceptible de rotation autour de celui-ci.

Le masque 6000 possède un décrochement localisé 6020 qui débouche sur sa périphérie extérieure et présente une série de dentures 6040 en forme d'un secteur de pignon.

Le diamètre externe du masque 6000 coïncide sensiblement avec le diamètre de la jupe 1020.

Cependant, le masque 6000 présente une encoche 6060 qui débouche sur sa périphérie externe. L'encoche 6060 est de préférence identique à l'encoche 3060.

Ces encoches 3060 et 6060 sont dimensionnées pour autoriser le passage de la patte souple 4100 lorsque les encoches 3060 et 6060 sont placées en regard de l'encoche 1200.

Le pignon 5000 est placé dans le décrochement 6020, dans l'épaisseur du masque 6000. Il est en prise par ses dentures 5020 avec les dentures 1300 et 6040. Le pignon 5000 qui s'étend perpendiculairement à l'axe de rotation O-O est guidé à rotation autour d'un axe parallèle à cet axe O-O. De préférence le pignon 5000 est ainsi guidé en étant pris en sandwich entre l'élément intermédiaire 1900 et le couvercle 3000.

Le pignon 5000 est en outre muni d'un pion ou doigt cylindrique 5100, d'axe parallèle à son axe de rotation, qui coulisse dans la gorge spiralée 3040.

Le fonctionnement du contacteur qui vient d'être décrit est le suivant.

En position point milieu du contacteur (correspondant à une position roues droites), comme illustré sur les figures 25 et 26, le pignon 5000 par son pion 5100 est centré dans le milieu de la rainure spiralée 3040 du couvercle 3000. Ses dentures 5020 sont positionnées dans les dents 1300 de la platine 2000 (ou élément fixe 1000) et dans les dents 6040 du masque 6000.

Les encoches 6060 du masque 6000 et 3060 du couvercle 3000 sont situées face au passage 1200. Elles autorisent par conséquent le déplacement de la patte d'encliquetage 4100 de l'élément haut de colonne, dans ledit passage 1200, pour permettre le montage et le démontage du contacteur par déformation élastique de ladite patte 4100.

Pour le démontage un effort F dirigé radialement vers l'intérieur, sur l'extrémité de la patte d'encliquetage 4100 permet d'effacer cette patte 4100 complètement de la zone en regard de la platine 2000 puisque la dimension radiale des encoches 6060, 3060 et du passage 1200 est supérieure à l'encombrement radial de la patte 4100 et permet ainsi de désolidariser l'ensemble de commande comprenant le contacteur rotatif du haut de colonne 4000 suivant l'axe O-O.

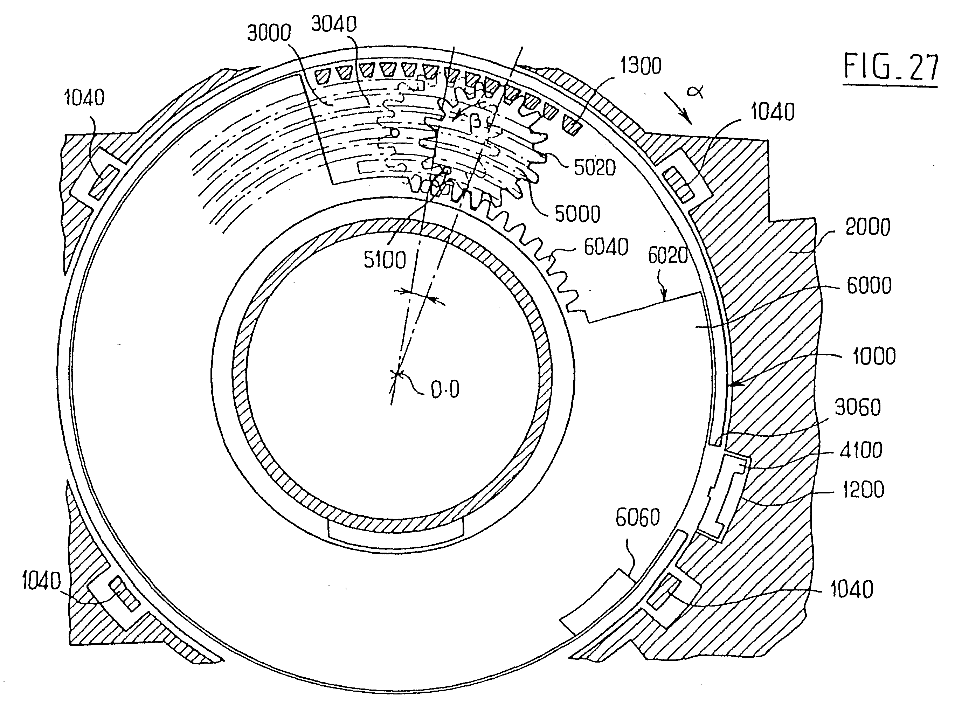

En position hors point milieu du contacteur (roues non droites), comme illustré sur les figures 27 à 30, lors d'une rotation α du couvercle 3000, la rainure spiralée 3040 entraine par l'intermédiaire du pion 5100 une rotation β du pignon 5000 de par l'engrenement des dentures 5020 dans la denture 1300. Le pignon 5000 de par l'engrenement des dentures 5020 dans les dentures 6040 du masque 6000 entraine alors en rotation celui-ci.

L'encoche 6060 du masque 6000 se trouve ainsi décalée angulairement de la patte de clipsage 4100.

Sous l'influence d'un effort F, la patte de clipsage 4100 ne peut alors s'effacer que partiellement puisque le masque 6000 obture au moins partiellement le passage 1200.

On ne peut donc désolidariser l'ensemble de commande lié au volant et comprenant le contacteur, du haut de colonne, ou assembler cet ensemble sur le haut de colonne.

On notera que la rotation du masque 6000 est due à deux effets conjugués : la rotation du pignon 5000 proprement dite et son déplacement du à l'engrenement des dentures 5020 sur la denture 1300.

Le système qui vient d'être décrit permet d'avoir une rotation du masque 6000 inférieure à un tour, par exemple de l'ordre de 90° pour une rotation multitours de l'élément 3000, par exemple de 2,5 tours.

Le système qui vient d'être décrit peut comprendre plusieurs pattes de guidage 4100.

Cependant, de préférence, il est prévu une seule patte d'encliquetage 4100 de sorte que l'une des mains de l'intervenant sollicite la patte 4100 par son extrémité tandis que son autre main assure le démontage/montage.

En variante, les pattes d'encliquetage 4100 pourraient être prévues non pas sur le haut de colonne, mais sur le volant auquel cas le boîtier de contacteur est fixé non pas sur le volant mais sur le haut de colonne.

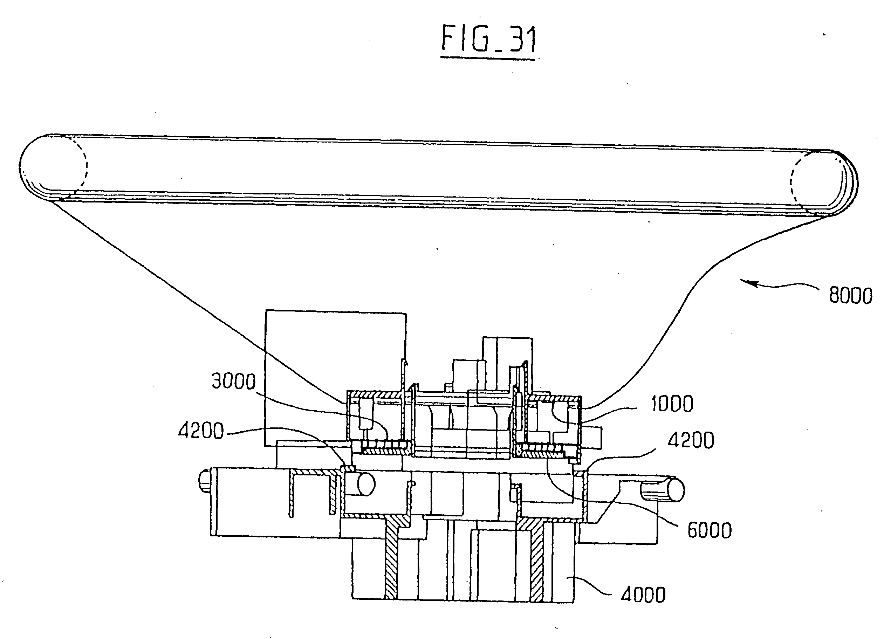

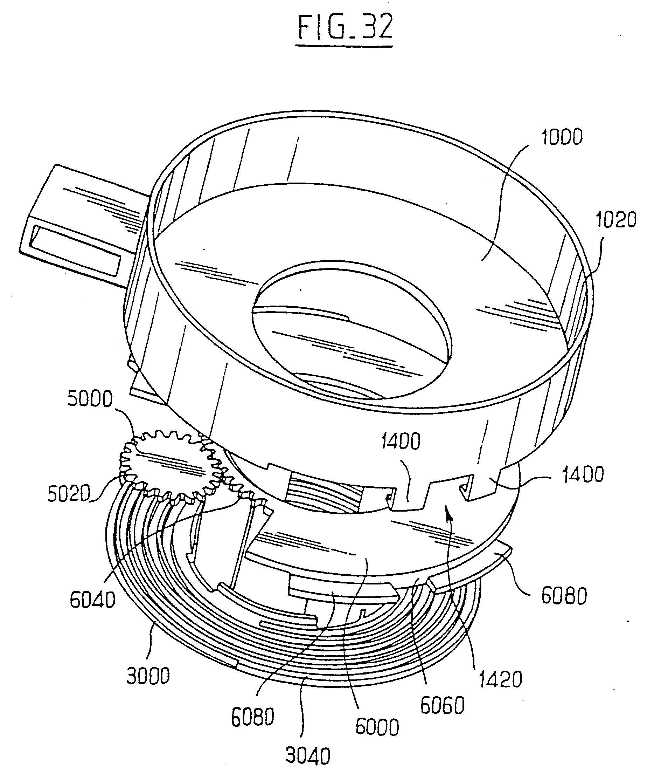

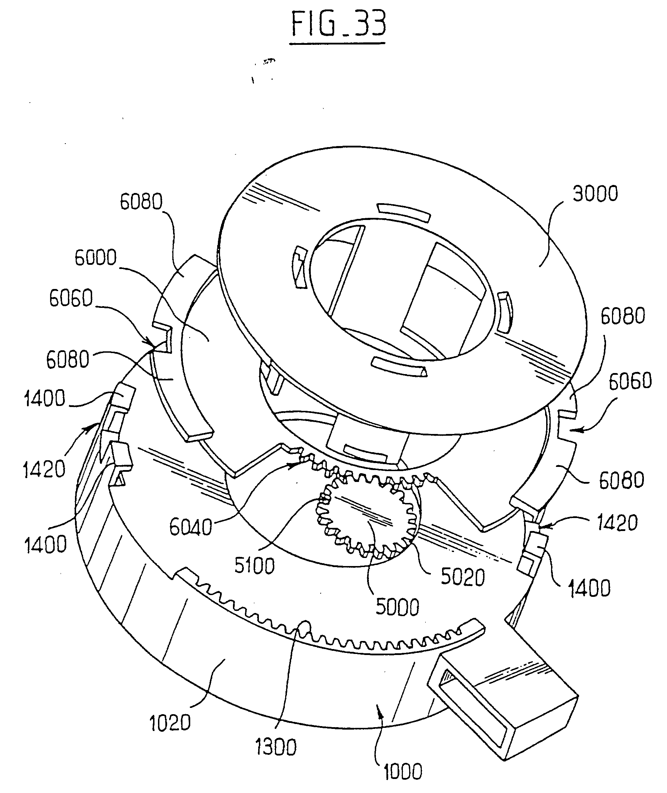

On va maintenant décire en regard des figures 31 à 35, une autre variante de contacteur électrique rotatif adapté pour interdire le démontage et le montage d'un volant en position roues non droites.

Sur la figure 31, le volant est schématisé sous la référence 8000.

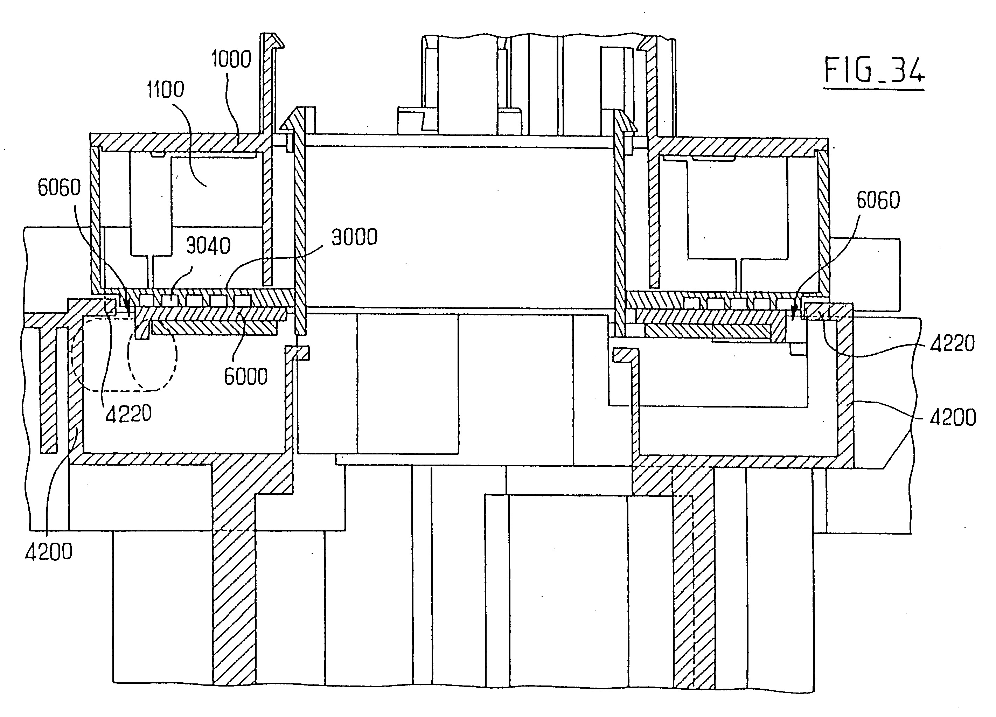

On retrouve sur ces figures 34 à 35, un contacteur comprenant deux éléments de boîtier 1000, 3000 équipés d'un pignon 5000 et d'un masque 6000 comme décrit précédemment, et un élément 4000 solidaire du haut de la colonne de direction.

L'élément 1000 de boîtier est fixé au volant 8000 par tout moyen approprié, en position centrée, par exemple par encliquetage.

L'élément 4000 est muni de plusieurs ergots 4200 en porte à faux équi-répartis autour de l'axe O-O, dont les têtes élargies 4220 font saillie radialement vers l'intérieur.

Les têtes 4220 sont complémentaires tant dans leur positionnement que dans leurs géométrie et dimensions d'encoches 3060, 6060 prévues sur la périphérie du couvercle 3000 et du masque 6000.

Selon les figures 31 à 35, l'élément 1000 de boîtier est équipé de zones de reprises d'efforts 1400 formées de poutres en portes à faux orientées axialement et dont les têtes élargies font saillie radialement vers l'intérieur. Les poutres 1400 sont prévues sur la périphérie extérieure de la jupe 1020 et sont positionnées pour encadrer deux à deux les encoches 3060, 6060. Elles définissent ainsi par paires, entre elles, des encoches 1420 qui sont fonctionnellement équivalentes au passage 1200 précité.

En position point milieu du contacteur encliqueté sur le volant, les encoches 1420 du boîtier 1000 et 6060 du masque 6000 sont alignées formant ensemble une zone dite de dégagement de largeur x supérieure à l'encombrement des ergots 4200. Les ergots 4200 de la platine 4000 de largeur y < x peuvent donc s'engager dans cette zone de dégagement (voir figure 34).

On comprendra aisément que cette situation permet le montage et le démontage du volant équipé de son contacteur tournant du haut de colonne par rapport à la platine 4000.

Lorsque l'appareil encliqueté sur le volant n'est pas en position point milieu et que l'ensemble n'est pas encore monté sur le haut de colonne, ce montage est interdit.

En effet, le mécanisme réducteur précité provoque lors d'une rotation relative des éléments 1000, 3000 un déplacement du masque 6000 de sorte que les encoches 6060 du masque ne sont plus alignées sur les encoches 1420. Les encoches 1420 se trouvent masquées par des zones 6080 du masque 6000 qui encadrent les encoches 6060.

Les ergots 4200 de la platine 4000 ne peuvent pas être introduits dans les encoches 6060.

De même, lorsque l'appareil encliqueté sur le volant n'est pas en position point milieu et que l'ensemble est monté sur la colonne, le démontage est interdit.

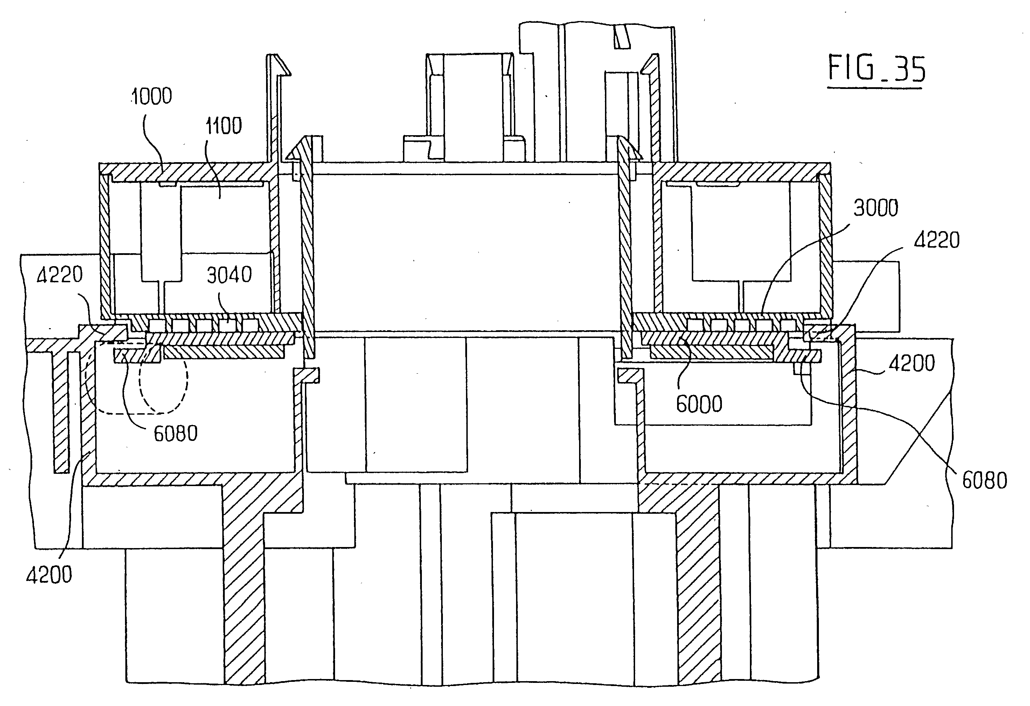

En effet, là encore, les encoches 6060 du masque 6000 ne sont pas alignées sur les encoches 1420. Ces encoches 1420 sont masquées au contraire par les zones 6080 (voir figure 35).

Il est alors impossible de démonter le volant. Pour assurer le démontage de celui-ci, il faut préalablement actionner ce volant 8000 pour retrouver le' point milieu correspondant à une position roues droites afin de se retrouver dans une configuration telle qu'illustrée sur la figuré 34.

On notera que pour écarter toute détérioration du masque 6000 ou démontage du volant 8000, roues non droites, les zones de reprise d'effort 1400 du boîtier 1000 protègent les zones d'indémontabilité 6080.

Sur un effort axial important, les zones 6080 viennent en appui sur les zones 1400 évitant toute déformation et rupture.

Selon le mode de réalisation des figures 34 à 35, le couvercle 3000 possède un diamètre inférieur au masque 6000 et est dépourvu d'encoche 3060 en périphérie. Plus précisément encore, le diamètre externe du couvercle 3000 est égal au diamètre sur lequel s'appuie le fond des encoches 6060 ménagées en périphérie du masque 6000. De ce fait, seul le masque 6000 obture les encoches 1420 et retient les ergots 4200, par leur tête 4220, lorsque le contacteur est placé hors position point milieu. De plus, les zones de masquage 6080 ne sont pas coplanaires du masque 6000 mais décalées par rapport à celui-ci, dans l'épaisseur du couvercle 3000. Ainsi les têtes 4220 des ergots 4200 viennent se loger entre les zones de masquage 6080 et le bord périphérique de la jupe 1020, sensiblement dans l'épaisseur du masque 6000 comme on le voit sur la figure 35. Le contacteur électrique rotatif conforme à la présente invention peut être équipé de moyens d'indication point milieu, de comptage de tours, de butées de course, de verrouillage en position livraison, classiques connus de l'homme de l'art.

La disposition du système illustré sur les figures 31 à 35 peut être inversée en ce sens que le contacteur électrique est fixé, par exemple par encliquetage, non pas sur le volant mais sur la platine 4000 solidaire du haut de colonne, le volant étant équipé d'ergots similaires aux ergots 4200 précités.

On notera que la présente invention permet d'éviter tout risque de détérioration des fonctions prévues sur le volant telles que la fonction AIRBAG, grâce au mécanisme qui permet en montage usine, d'interdire de monter le volant si le contacteur n'est pas en position point milieu, la direction étant elle en cette position, et en réparation interdit de démonter le volant si les roues du véhicules ne sont pas en position droite.

Par ailleurs, l'invention n'est pas limitée au mode de réalisation spécifique précédemment décrit dans lequel la gorge spiralée 3040 et la denture 1300 sont formées respectivement sur l'élément rotatif 3000 et sur l'élément fixe 1000. L'essentiel est simplement de prévoir la gorge spiralée 3040 et les dentures 1300 assurant le déplacement du pignon 5000 sur deux pièces du contacteur susceptibles de rotation relative.

Ainsi, à titre d'exemples non limitatifs, on peut prévoir les dentures 1300 sur l'élément fixe 1000 et la gorge spiralée 3040 sur un élément intercalé entre l'élément fixe 1000 et l'élément rotatif 3000 et lié à rotation au moins indirectement avec ce dernier, ou encore prévoir la denture 1300 sur un tel élément intermédiaire et la gorge spiralée 3040 sur l'élément rotatif 3000.

La structure générale d'un tel contacteur électrique rotatif comprenant un élément intermédiaire est bien connue de l'homme de l'art et ne sera donc pas décrite dans le détail par la suite.

En outre, l'installation des éléments 1000 et 3000 de boîtier peut être inversée en ce sens que l'élément 1000 est fixé sur le volant à la place de l'élément 3000.

Par ailleurs en variante, l'ensemble illustré sur les figures 25 à 35 peut être dépourvu de ruban conducteur 7000. Dans ce cas, l'ensemble ne remplit pas de fonction contacteur électrique mais sert uniquement à garantir le montage et le démontage du volant en position point milieu des roues.

## Revendications

1. Ensemble pour haut de colonne de direction de véhicule automobile, comprenant :
- un premier élément de boîtier fixe (10, 100, 1000) conçu pour être fixé sur le haut d'une colonne de direction,
- un second élément de boîtier mobile (20, 200, 2000) conçu pour être lié à rotation avec le volant, et
- des moyens de contrôle (50, 400, 6000) en prise à la fois avec le premier élément de boîtier fixe (10, 100, 1000) et le second élément de boitier mobile (20, 200, 3000) pour être déplacés par rapport à ceux-ci lors d'une rotation relative entre ces éléments, **caractérisé par le fait que** lesdits moyens de contrôle comprennent un volet (400) ou un masque (50, 6000) mobile imposant une position unique de montage du volant.

2. Ensemble selon la revendication 1, **caractérisé par le fait que** les moyens de contrôle (50, 400, 6000) comprennent des moyens à compléments de forme qui n'autorisent la mise en place du volant que dans une position relative unique prédéterminée des deux éléments fixe (10, 100, 1000) et mobile (20, 200, 3000).

3. Ensemble selon l'une des revendications 1 ou 2, **caractérisé par le fait que** lesdits moyens de contrôle (50, 400, 6000) n'autorisent l'accès aux moyens de fixation (30) du volant que dans une position relative unique des deux éléments.

4. Ensemble selon l'une des revendications 1 à 3, **caractérisé par le fait qu'**il comprend en outre un élément électriquement conducteur souple (C, 300, 7000) placé entre l'élément fixe (10, 100, 1000) et l'élément mobile (20, 200, 3000) pour former contacteur électrique rotatif.

5. Ensemble selon l'une des revendications 1 à 4. **caractérisé par le fait qu'**il comporte :
- une rainure radiale prévue sur une première pièce (10),
- une gorge spiralée (22) et une rampe (24) prévues sur une seconde pièce (20) susceptibles de rotation relative par rapport à la première,
- un index (40) en prise, d'une part avec la gorge spiralée (22) et, d'autre part avec la rainure radiale de sorte que ledit index (40) soit déplacé radialement dans la rainure lors d'un déplacement relatif entre les deux pièces (10, 20), ledit index (40) comportant une gorge (43), et
- un masque (50) adapté pour être engagé dans la gorge (43) de l'index (40) et reposant sur la rampe (24) de la seconde pièce (20), de sorte que ladite rampe (24) n'autorise l'engagement du masque (50) dans la gorge (43) que dans une position unique prédéterminée relative entre l'élément fixe (10) et l'élément mobile (20), le masque (50) interdisant l'accès aux moyens de fixation (30) du volant lorsqu'il est sollicité vers l'extérieur de la gorge (43) par ladite rampe (24).

6. Ensemble selon la revendication 5, **caractérisé par le fait que** la première pièce (10) munie de la rainure radiale correspond à l'élément fixe (10).

7. Ensemble selon l'une des revendications 5 ou 6, **caractérisé par le fait que** la seconde pièce munie de la gorge spiralée (22) et de la rampe (24) correspond à l'élément mobile (20).

8. Ensemble selon l'une des revendications 5 ou 6, **caractérisé par le fait que** la seconde pièce munie de la gorge spiralée (22) et de la rampe (24) correspond à une pièce intermédiaire située entre l'élément fixe (10) et l'élément mobile (20) et liée à rotation au moins indirectement avec l'élément mobile (20).

9. Ensemble selon l'une des revendications 5 à 8, **caractérisé par le fait que** la rampe (24) prévue sur la seconde pièce (20) est constituée d'une nervure annulaire comportant un décrochement localisé (25).

10. Ensemble selon l'une des revendications 5 à 9, **caractérisé par le fait que** l'index (40) comporte un corps (42) engagé dans la rainure radiale de l'élément fixe (10) et complémentaire de la largeur de cette rainure de sorte que l'index (40) peut coulisser radialement dans la rainure.

11. Ensemble selon l'une des revendications 5 à 10, **caractérisé par le fait que** l'index (40) comporte un doigt (44) engagé dans la gorge spiralée (22).

12. Ensemble selon l'une des revendications 5 à 11, **caractérisé par le fait que** la gorge (43) formée dans l'index (40) est orientée en direction périphérique par rapport à l'axe de rotation dudit élément de boîtier mobile.

13. Ensemble selon l'une des revendications à 12, **caractérisé par le fait que** le masque (50) comporte une toile (52) munie d'un alésage (53) positionné pour n'être centré sur les moyens de fixation (30) du volant que dans une position relative unique de l'élément fixe (10) et de l'élément mobile (20).

14. Ensemble selon la revendication 13, **caractérisé par le fait que** la toile (52) est formée d'un secteur de cylindre.

15. Ensemble selon l'une des revendications 13 ou 14, **caractérisé par le fait que** l'alésage (53) est dimensionné pour autoriser l'engagement d'une tête de vis (34) appartenant au moyen de fixation du volant lorsqu'il est centré sur celle-ci.

16. Ensemble selon l'une des revendications 5 à 15, **caractérisé par le fait que** le masque (50) possède une paroi (54) susceptible d'être introduite dans la gorge (43) de l'index (40).

17. Ensemble selon la revendication 16, **caractérisé par le fait que** la paroi (54) est formée d'un secteur de cylindre.

18. Ensemble selon l'une des revendications 5 à 17, **caractérisé par le fait que** le masque (50) possède un pion (56) adapté pour reposer sur la rampe (24) et pénétrer dans un décrochement localisé (25) de celle-ci.

19. Ensemble selon l'une des revendications 5 à 18, **caractérisé par le fait que** lc'masque (50) est guidé à translation axiale sur l'élément fixe.

20. Ensemble selon l'une des revendications 5 à 19, **caractérisé par le fait qu'**il est prévu un moyen élastique qui sollicite le masque (50) vers l'intérieur de la gorge (43) de l'index (40).

21. Ensemble selon l'une des revendications 1 à 4, **caractérisé par le fait qu'**il comprend un volet de détrompage (400) articulé à pivotement sur l'un (100, 140) des éléments et des moyens (500, 510) d'entraînement du volet de détrompage (400) qui comprennent un guide spirale (250) lié à l'autre élément (200) et concentrique à l'axe de rotation relatif des deux éléments (100, 200) et un index (510) qui est d'une part articulé sur le volet de détrompage (400) et d'autre part engagé dans le guide spirale (250).

22. Ensemble selon la revendication 21, **caractérisé par le fait que** le volet de détrompage (400) est monté à déplacement à pivotement et à coulissement sur l'un (100, 140) des éléments.

23. Ensemble selon l'une des revendications 21 ou 22, **caractérisé par le fait que** le volet de détrompage (400) est monté à pivotement sur une entretoise (140) liée à rotation au boîtier (100).

24. Ensemble selon l'une des revendications 21 à 23,**caractérisé par le fait que** les moyens (500, 510) d'entraînement du volet de détrompage (400) comprennent un segment de spirale (514) engagé dans un guide spirale (250) lié à l'un des deux éléments (100, 200) et un tourillon (512) engagé dans un trou complémentaire formé dans le volet de détrompage (400).

25. Ensemble selon l'une des revendications 21 à 24, **caractérisé par le fait que** le volet de détrompage (400) est muni d'au moins une joue (432) adjacente à un évidement (410), adaptée pour recouvrir un moyen de fixation (120) lorsque les deux éléments (100, 200) sont écartés de leur position relative unique.

26. Ensemble selon l'une des revendications 21 à 25, **caractérisé par le fait que** le volet de détrompage (400) comprend des joues (412, 414) respectivement de part et d'autre d'un évidement (410), pour recouvrir un oeillet de fixation (120) lorsque les deux éléments (100, 200) sont écartés de leur position relative unique.

27. Ensemble selon l'une des revendications 21 à 26, **caractérisé par le fait qu'**il comprend en outre au moins une découpe (202, 141) dans l'un au moins des éléments (100, 200), laquelle découpe (141, 202) est positionnée en regard d'un oeillet de fixation (120), au moins dans une position relative des éléments (100, 200).

28. Ensemble selon l'une des revendications 21 à 27, **caractérisé par le fait qu'**il comprend en outre une fenêtre (290) sur l'un des deux éléments (100, 200), positionnée pour coïncider avec un index (510) engagé dans un guide spirale (250) formé dans l'un des deux éléments (100, 200) dans une position relative prédéterminée de ceux-ci.

29. Ensemble selon l'une des revendications 21 à 28, **caractérisé par le fait que** le volet de détrompage (400) est monté à déplacement sur l'un (100) des éléments et **par le fait qu'**il comprend un organe élastique qui sollicite le volet de détrompage vers l'autre élément (200).

30. Ensemble selon la revendication 29, **caractérisé par le fait que** ledit autre élément possède un logement (240) dans sa surface en regard du volet de détrompage (400) et **par le fait que** ce dernier possède une structure de came (430) apte à reposer dans le logement (240) en position relative unique.

31. Ensemble selon l'une des revendications 21 à 30, **caractérisé par le fait que** le volet de détrompage (400) est monté à déplacement sur un élément (100) qui possède deux tourillons (144, 146) engagés respectivement dans des zones guide (420, 422) formées dans le volet de détrompage (400).

32. Ensemble selon la revendication 31, **caractérisé par le fait que** l'une au moins des zones guide (420) est incurvée et débouche dans un évidement (410) formé dans le volet de détrompage (400).

33. Ensemble selon l'une des revendications 31 ou 32, **caractérisé par le fait que** l'une au moins des zones guide (422) est formée d'une gorge qui débouche sur l'extérieur du volet de détrompage (400).

34. Ensemble selon l'une des revendications 31 à 33, **caractérisé par le fait que** la largeur des zones guide (420, 422) est complémentaire de celles des tourillons (144, 146) pour autoriser un déplacement relatif entre ceux-ci.

35. Ensemble selon l'une des revendications 31 à 34, **caractérisé par le fait que** l'une au moins des zones guide est formée d'une gorge incurvée centrée sur l'axe d'un tourillon (146, 144) placé dans l'autre zone guide (422

36. Ensemble selon l'une des revendications 21 à 35, **caractérisé par le fait que** le volet de détrompage (400) est monté à pivotement sur le boîtier (100) et coopère avec des moyens d'entraînement comprenant un index (510) engagé dans un guide spirale (250) formé dans le couvercle (200).

37. Ensemble selon l'une des revendications 21 à 35, **caractérisé par le fait que** le volet de détrompage (400) est monté à pivotement sur le couvercle (200) et coopère avec des moyens d'entraînement comprenant un index (510) engagé dans un guide spirale (250) formé sur le boîtier (100).

38. Ensemble selon l'une des revendications 1 à 37, **caractérisé par le fait que** les moyens (30) de fixation du volant comprennent au moins une vis (34).

39. Ensemble selon la revendication 38, **caractérisé par le fait que** la vis (34) est orientée radialement par rapport à l'axe de la colonne.

40. Ensemble selon la revendication 38, **caractérisé par le fait que** les moyens (30) de fixation sont orientés parallèlement à l'axe de la colonne.

41. Ensemble selon l'une des revendications 1 à 4, **caractérisé par le fait qu'**il comporte :
- une rainure spiralée (3040) sur une pièce liée à rotation avec un élément (3000),
- au moins un pignon (5000) muni d'un doigt (5100) engagé dans ladite rainure spiralée (3040), lequel pignon (5000) est en prise avec une pièce liée à l'autre élément (1000), et
- un masque (6000) monté à déplacement sur le contacteur et en prise avec ledit pignon (5000), lequel masque (6000) possède au moins une encoche périphérique (6060) qui n'est libérée, pour autoriser la mise en place du contacteur, que dans une position unique prédéterminée desdits éléments.

42. Ensemble selon la revendication 41, **caractérisé par le fait que** l'élément (1000) de boîtier fixe possède une encoche périphérique apte à coopérer avec ladite encoche (6060) du masque lorsque le contacteur est dans ladite position unique prédéterminée pour autoriser le passage d'un élément de verrouillage (4100, 4200).

43. Ensemble selon l'une des revendications 41 ou 42, **caractérisé par le fait que** l'élément de boîtier fixe (1000) est solidaire d'une platine support (2000) et définit en combinaison avec celle-ci un passage (1200) apte à coopérer avec l'encoche (6060) du masque (6000) lorsque le contacteur est dans ladite position unique prédéterminée pour autoriser le passage d'un élément de verrouillage (4100, 4200).

44. Ensemble selon l'une des revendications 41 à 43, **caractérisé par le fait que** l'élément (3000) mobile de boîtier possède une encoche périphérique (3060) apte à coopérer avec l'encoche (6060) du masque (6000) lorsque le contacteur est dans ladite position unique prédéterminée pour autoriser le passage d'un élément de verrouillage (4100, 4200).

45. Ensemble selon l'une des revendications 41 à 44, **caractérisé par le fait que** l'élément de verrouillage (4100) apte à pénétrer dans l'encoche (6060) du masque (6000) en position unique prédéterminée du contacteur est formée d'une patte élastique d'encliquetage.

46. Ensemble selon la revendication 45, **caractérisé par le fait que** la patte élastique d'encliquetage (4100) est solidaire d'un élément (4000) fixé sur le haut d'une colonne de direction.

47. Esemble selon la revendication 45, **caractérisé par le fait que** la patte élastique d'encliquetage (4100) est solidaire d'un volant.

48. Ensemble selon l'une des revendications 41 à 47, **caractérisé par le fait que** l'élément de verrouillage susceptible de pénétrer dans l'encoche (6060) du masque (6000) en position unique prédéterminée est formé d'au moins un ergot (4200) en porte à faux.

49. Ensemble selon la revendication 48, **caractérisé par le fait que** l'ergot (4200) en porte à faux est solidaire d'un haut de colonne de direction.

50. Ensemble selon la revendication 48, **caractérisé par le fait que** l'ergot en porte à faux (4200) est solidaire d'un volant.

51. Ensemble selon l'une des revendications 41 à 50, **caractérisé par le fait que** la rainure spiralée (3040) est formée sur l'élément mobile de boîtier (3000).

52. Ensemble selon l'une des revendications 41 à 50, **caractérisé par le fait que** la rainure spiralée (3040) est prévue sur un élément intermédiaire situé entre l'élément mobile (3000) et l'élément fixe (1000) de boîtier, lequel élément intermédiaire est lié à rotation avec l'élément mobile.

53. Ensemble selon l'une des revendications 41 à 52, **caractérisé par le fait que** le pignon (5000) est en prise par sa denture extérieure, d'une part avec une denture (1300) prévue sur ledit autre élément (1000) et d'autre part avec une denture (6040) prévue sur le masque (6000).

54. Ensemble selon la revendication 53, **caractérisé par le fait que** le masque (6000) comprend un décrochement (6020) qui débouche sur sa périphérie extérieure et dont le fond est muni de dentures (6040) coopérant avec le pignon (5000).

55. Ensemble selon l'une des revendications 41 à 54, **caractérisé par le fait que** le pignon (5000) est porté par une pièce intermédiaire (1900) située dans la chambre annulaire (1100) du contacteur.

56. Ensemble selon l'une des revendications 41 à 55, **caractérisé par le fait que** le masque (600) est formé d'une couronne munie en périphérie de zones de masquage (608) qui encadre une encoche (606) non coplanaire.

57. Ensemble selon la revendication 56, **caractérisé par le fait que** l'élément (100) de boîtier fixe comprend en périphérie des structures (140) de reprise d'effort apte à supporter les zones de masquage (608) du masque.

58. Ensemble selon l'une des revendications 1 à 57, **caractérisé par le fait qu'**il comprend des moyens (12) associés à un index (40, 510) pour visualiser le nombre de tours de rotation relative entre l'élément fixe (10, 100) et l'élément mobile (20, 200).

## Patentansprüche

1. Einrichtung bzw. Baugruppe am Lenksäulenoberteil eines Kraftfahrzeugs, mit den folgenden Merkmalen:
- ein erstes, festes Gehäuseelement (10, 100, 1000), das dazu konzipiert ist, um an der Oberseite einer Lenksäule befestigt zu werden,
- ein zweites, bewegliches Gehäuseelement (20, 200, 3000), das dazu konzipiert ist, um mit dem Lenkrad zur Drehung verbunden zu werden, und
- Steuermittel (50, 400, 6000), die gleichzeitig mit dem ersten, festen Gehäuseelement (10, 100, 1000) und dem zweiten, beweglichen Gehäuseelement (20, 200, 3000) in Eingriff stehen, um während einer Relativdrehung zwischen diesen Elementen bezüglich deren versetzt zu werden,
**dadurch gekennzeichnet, daß** die genannten Steuermittel eine Klappe (400) oder eine bewegliche Maske (50, 6000) aufweisen, die dem Lenkrad eine einzige Montageposition vorgibt.

2. Baugruppe nach Anspruch 1, **dadurch gekennzeichnet, daß** die Steuermittel (50, 400, 6000) formergänzende Mittel aufweisen, die das Einsetzen des Lenkrades nur in einer einzigen Relativlage der beiden Elemente, und zwar des festen (10, 100, 1000) und des beweglichen (20, 200, 3000), zulassen.

3. Baugruppe nach einem der Ansprüche 1 oder 2, **dadurch gekennzeichnet, daß** die genannten Steuermittel (50, 400, 6000) den Zugang zu Befestigungsmitteln (30) des Lenkrades nur in einer einzigen Relativlage der beiden Elemente zulassen.

4. Baugruppe nach einem der Ansprüche 1 bis 3, **dadurch gekennzeichnet, daß** sie außerdem ein nachgiebiges, elektrisch leitfähiges Element (C, 300, 7000) aufweist, das zwischen dem festen Element (10, 100, 1000) und dem beweglichen Element (20, 200, 3000) angeordnet ist, um einen drehbaren, elektrischen Kontaktgeber zu bilden.

5. Baugruppe nach einem der Ansprüche 1 bis 4, **dadurch gekennzeichnet, daß** sie folgende Merkmale aufweist:
- eine Radialnut, die auf einem ersten Teil (10) vorgesehen ist,
- eine in einer Spirale verlaufende Auskehlung (22) und eine Rampe (24), die auf einem zweiten Teil (20) vorgesehen sind und die zur relativen Drehung bezüglich des ersten Teiles imstande sind,
- ein Indexglied (40), das einerseits mit der in einer Spirale verlaufenden Auskehlung (22) und anderseits mit der radialen Nut derart in Eingriff steht, daß das genannte Indexglied (40) während einer relativen Versetzung zwischen den beiden Teilen (10, 20) radial in die Nut versetzt wird, wobei das genannte Indexglied (40) eine Auskehlung (43) aufweist, und
- eine Maske (50), die dazu eingerichtet ist, in Eingriff in die Auskehlung (43) des Indexgliedes (40) verbracht zu werden und auf der Rampe (24) des zweiten Teils (20) derart ruht, daß die genannte Rampe (24) den Eingriff der Maske (50) in die Auskehlung (43) nur in einer einzigen, vorbestimmten Relativlage zwischen dem festen Element (10) und dem beweglichen Element (20) zuläßt, während die Maske (50) den Zugang zu Befestigungsmitteln (30) des Lenkrads sperrt, wenn sie durch die genannte Rampe (24) zur Außenseite der Auskehlung (43) hin vorbelastet ist.

6. Baugruppe nach Anspruch 5, **dadurch gekennzeichnet, daß** das erste Teil (10), das mit der radialen Nut ausgestattet ist, dem festen Element (10) entspricht.

7. Baugruppe nach einem der Ansprüche 5 oder 6, **dadurch gekennzeichnet, daß** das zweite Teil, das mit der in einer Spirale verlaufenden Auskehlung (22) und mit der Rampe (24) ausgestattet ist, dem beweglichen Element (20) entspricht.

8. Baugruppe nach einem der Ansprüche 5 oder 6, **dadurch gekennzeichnet, daß** das zweite Teil, das mit der in einer Spirale verlaufenden Auskehlung (22) und der Rampe (24) ausgestattet ist, einem Zwischenstück zwischen dem festen Element (10) und dem beweglichen Element (20) entspricht und mit dem beweglichen Element (20) mindestens indirekt zur Drehung verbunden ist.

9. Baugruppe nach einem der Ansprüche 5 bis 8, **dadurch gekennzeichnet, daß** die Rampe (24), die auf dem zweiten Teil (20) vorgesehen ist, von einer ringförmigen Rippe gebildet ist, die einen zurückversetzen Abschnitt (25) aufweist.

10. Baugruppe nach einem der Ansprüche 5 bis 9, **dadurch gekennzeichnet, daß** das Indexglied (40) einen Körper (42) aufweist, der in die radiale Nut des festen Elements (10) eingreift und zur Breite dieser Nut komplementär ist, so daß das Indexglied (40) radial in der Nut gleiten kann.

11. Baugruppe nach einem der Ansprüche 5 bis 10, **dadurch gekennzeichnet, daß** das Indexglied (40) einen Finger (44) aufweist, der in die in einer Spirale verlaufende Auskehlung (22) eingreift.

12. Baugruppe nach einem der Ansprüche 5 bis 11, **dadurch gekennzeichnet, daß** die Auskehlung (43), die im Indexglied (40) ausgebildet ist, bezüglich der Drehachse des zweites, bewegliches Gehäuseelement in Umfangsrichtung ausgerichtet ist.

13. Baugruppe nach einem der Ansprüche 5 bis 12, **dadurch gekennzeichnet, daß** die Maske (50) eine Abdeckung (52) aufweist, die mit einer Bohrung (53) versehen ist, die so angeordnet ist, daß sie auf die Befestigungsmittel (30) des Lenkrades nur in einer einzigen Relativlage des festen Elements (10) und des beweglichen Elements (20) zentriert ist.

14. Baugruppe nach Anspruch 13, **dadurch gekennzeichnet, daß** die Abdeckung (52) von einem Zylindersektor gebildet ist.

15. Baugruppe nach einem der Ansprüche 13 oder 14, **dadurch gekennzeichnet, daß** die Bohrung (53) dazu bemessen ist, den Eingriff eines Schraubenkopfes (34), der zum Befestigungsmittel des Lenkrades gehört, zu gestatten, wenn dieses auf diesen zentriert ist.

16. Baugruppe nach einem der Ansprüche 5 bis 15, **dadurch gekennzeichnet, daß** die Maske (50) eine Wand (54) besitzt, die imstande ist, in die Auskehlung (43) des Indexgliedes (40) eingeführt zu werden.

17. Baugruppe nach Anspruch 16, **dadurch gekennzeichnet, daß** die Wand (54) von einem Zylindersektor gebildet ist.

18. Baugruppe nach einem der Ansprüche 5 bis 17, **dadurch gekennzeichnet, daß** die Maske (50) einen Mitnehmer (56) aufweist, der dazu eingerichtet ist, auf der Rampe (24) aufzuliegen und in einen örtlichen, zurückversetzten Abschnitt (25) dieser einzufallen.

19. Baugruppe nach einem der Ansprüche 5 bis 18, **dadurch gekennzeichnet, daß** die Maske (50) zur axialen Translationsbewegung auf dem festen Element geführt ist.

20. Baugruppe nach einem der Ansprüche 5 bis 19, **dadurch gekennzeichnet, daß** ein elastisches Mittel vorgesehen ist, das die Maske (50) zur Innenseite der Auskehlung (43) des Indexgliedes (40) hin vorbelastet.

21. Baugruppe nach einem der Ansprüche 1 bis 4, **dadurch gekennzeichnet, daß** sie eine Unverwechselbarkeitsklappe (400) aufweist, die zur Schwenkbewegung auf einem (100, 140) der Elemente angelenkt ist, und Mittel (500, 510) zum Antrieb der Unverwechselbarkeitsklappe (400), die eine Spiralführung (250) aufweisen, die mit dem anderen Element (200) verbunden und zur Achse der relativen Drehung der beiden Elemente (100, 200) konzentrisch ist, und ein Indexglied (510), das einerseits auf der Unverwechselbarkeitsklappe (400) angelenkt ist und andererseits in die Spiralführung (250) eingreift.

22. Baugruppe nach Anspruch 21, **dadurch gekennzeichnet, daß** die Unverwechselbarkeitsklappe (400) zur Verlagerung bei Schwenkbewegung und zum Gleiten über eines (100, 140) der Elemente angebracht ist.

23. Baugruppe nach einem der Ansprüche 21 oder 22, **dadurch gekennzeichnet, daß** die Unverwechselbarkeitsklappe (400) zur Schwenkbewegung auf einem Zwischenstück (140) angebracht ist, das zur Drehung mit dem Gehäuse (100) verbunden ist.

24. Baugruppe nach einem der Ansprüche 21 bis 23, **dadurch gekennzeichnet, daß** die Mittel (500, 510) zum Antrieb der Unverwechselbarkeitsklappe (400) ein Spiralsegment (514) aufweisen, das in eine Spiralführung (250) eingreift, die mit einem der beiden Elemente (100, 200) verbunden ist, und einen Lagerzapfen (512), der in eine komplementäre Bohrung eingreift, die in der Unverwechselbarkeitsklappe (400) ausgebildet ist.

25. Baugruppe nach einem der Ansprüche 21 bis 24, **dadurch gekennzeichnet, daß** die Unverwechselbarkeitsklappe (400) mit mindestens einer Wange (432) neben einer Ausnehmung (410) versehen ist, wobei die Wange dazu eingerichtet ist, ein Befestigungsmittel (120) abzudecken, wenn die beiden Elemente (100, 200) von ihrer einzigen Relativlage entfernt sind.

26. Baugruppe nach einem der Ansprüche 21 bis 25, **dadurch gekennzeichnet, daß** die Unverwechselbarkeitsklappe (400) Wangen (412, 414) jeweils beiderseits einer Ausnehmung (410) aufweist, um ein Befestigungsauge (120) abzudecken, wenn die beiden Elemente (100, 200) von ihrer einzigen Relativlage entfernt sind.

27. Baugruppe nach einem der Ansprüche 21 bis 26, **dadurch gekennzeichnet, daß** sie außerdem mindestens einen Ausschnitt (202, 141) in mindestens einem der Elemente (100, 200) aufweist, wobei der genannte Ausschnitt (141, 202) einem Befestigungsauge (120) gegenüberliegend in mindestens einer Relativlage der Elemente (100, 200) angeordnet ist.

28. Baugruppe nach einem der Ansprüche 21 bis 27, **dadurch gekennzeichnet, daß** sie außerdem ein Fenster (290) auf einem der beiden Elemente (100, 200) aufweist, das dazu angeordnet ist, um sich mit einem Indexglied (510) zu decken, das in eine Spiralführung (250), die in einem der beiden Elemente (100, 200) ausgebildet ist, in einer bestimmten Relativiage dieser eingreift.

29. Baugruppe nach einem der Ansprüche 21 bis 28, **dadurch gekennzeichnet, daß** die Unverwechselbarkeitsklappe (400) zur Versetzung auf dem einen (100) der beiden Elemente angebracht ist, und daß sie ein elastisches Organ aufweist, das die Unverwechselbarkeitsklappe gegen das andere Element (200) vorbelastet.

30. Baugruppe nach Anspruch 29, **dadurch gekennzeichnet, daß** das genannte andere Element einen Sitz (240) in seiner der Unverwechselbarkeitsklappe (400) gegenüberliegenden Oberfläche besitzt, und daß diese Klappe eine Nockenstruktur (430) besitzt, die dazu eingerichtet ist, in der einzigen Relativlage im Sitz (240) zu ruhen.

31. Baugruppe nach einem der Ansprüche 21 bis 30, **dadurch gekennzeichnet, daß** die Unverwechselbarkeitsklappe (400) zur Verlagerung auf einem Element (100) angebracht ist, das zwei Drehzapfen (144, 146) besitzt, die jeweils in Führungszonen (420, 422) eingreifen, die in der Unverwechselbarkeitsklappe (400) ausgebildet sind.

32. Baugruppe nach Anspruch 31, **dadurch gekennzeichnet, daß** mindestens eine der Führungszonen (420) gekrümmt ist und in eine Ausnehmung (410) einmündet, die in der Unverwechselbarkeitsklappe (400) ausgebildet ist.

33. Baugruppe nach einem der Ansprüche 31 oder 32, **dadurch gekennzeichnet, daß** mindestens eine der Führungszonen (422) von einer Auskehlung gebildet ist, die auf der Außenseite der Unverwechselbarkeitsklappe (400) einmündet.

34. Baugruppe nach einem der Ansprüche 31 bis 33, **dadurch gekennzeichnet, daß** die Breite der Führungszonen (420, 422) komplementär zu der der Drehzapfen (144, 146) ist, um eine relative Verlagerung zwischen diesen zu ermöglichen.

35. Baugruppe nach einem der Ansprüche 31 bis 34, **dadurch gekennzeichnet, daß** mindestens eine der Führungszonen aus einer gekrümmten Auskehlung gebildet ist, die auf die Achse eines Drehzapfens (146, 144) zentriert ist, der in der anderen Führungszone (422) sitzt.

36. Baugruppe nach einem der Ansprüche 21 bis 35, **dadurch gekennzeichnet, daß** die Unverwechselbarkeitsklappe (400) auf dem Gehäuse (100) zur Schwenkbewegung angebracht ist und mit Antriebsmitteln zusammenwirkt, die ein Indexglied (510) aufweisen, das in eine Spiralführung (250) eingreift, die im Deckel (200) ausgebildet ist.

37. Baugruppe nach einem der Ansprüche 21 bis 35, **dadurch gekennzeichnet, daß** die Unverwechselbarkeitsklappe (400) zur Schwenkbewegung auf dem Deckel (200) angebracht ist und mit Antriebsmitteln zusammenwirkt, die ein Indexglied (510) aufweisen, das in eine Spiralführung (250) eingreift, die auf dem Gehäuse (100) ausgebildet ist.

38. Baugruppe nach einem der Ansprüche 1 bis 37, **dadurch gekennzeichnet, daß** die Mittel (30) zur Befestigung des Lenkrades mindestens eine Schraube (34) aufweisen.

39. Baugruppe nach Anspruch 38, **dadurch gekennzeichnet, daß** die Schraube (34) bezüglich der Achse der Säule radial ausgerichtet ist.

40. Baugruppe nach Anspruch 38, **dadurch gekennzeichnet, daß** die Befestigungsmictel (30) parallel zur Achse der Säule ausgerichtet sind.

41. Baugruppe nach einem der Ansprüche 1 bis 4, **dadurch gekennzeichnet, daß** sie die folgenden Merkmale aufweist:
- eine spiralige Nut (3040) auf einem Teil, das zur Drehung mit einem Element (3000) verbunden ist,
- mindestens ein Ritzel (5000), das mit einem Finger (5100) versehen ist, der in die genannte, spiralige Nut (3040) eingreift, wobei dieses Ritzel (5000) mit einem Teil in Eingriff sieht, das mit dem anderen Element (1000) verbunden ist, und
- eine Maske (6000), die zur Verlagerung auf dem Kontaktgeber angebracht ist und in Eingriff mit dem genannten Ritzel (5000) steht, wobei diese Maske (6000) mindestens eine Umfangskerbe (6060) besitzt, die, um das Einsetzen des Kontaktgebers zu gestatten, nur in einer einzigen, vorbestimmten Lage der genannten Elemente freigegeben ist.

42. Baugruppe nach Anspruch 41, **dadurch gekennzeichnet, daß** das feste Gehäuseelement (1000) eine Umfangskerbe besitzt, die dazu eingerichtet ist, mit der genannten Kerbe (6060) der Maske zusammenzuwirken, wenn sich der Kontaktgeber in der genannten, vorbestimmten, einzigen Lage befindet, um den Durchgang eines Verriegelungselementes (4100, 4200) zu ermöglichen.

43. Baugruppe nach einem der Ansprüche 41 oder 42, **dadurch gekennzeichnet, daß** das feste Gehäuseelement (1000) fest mit einer Unterstützungsplatine (2000) verbunden ist und in Kombination mit dieser einen Durchgang (1200) definiert, der dazu eingerichtet ist, mit der Kerbe (6060) der Maske (6000) zusammenzuwirken, wenn sich der Kontaktgeber in der genannten, einzigen, vorbestimmten Lage befindet, um den Durchgang eines Verriegelungselementes (4100, 4200) zu ermöglichen.

44. Baugruppe nach einem der Ansprüche 41 bis 43, **dadurch gekennzeichnet, daß** das bewegliche Gehäuseelement (3000) eine Umfangskerbe (3060) besitzt, die dazu eingerichtet ist, mit der Kerbe (6060) der Maske (6000) zusammenzuwirken, wenn sich der Kontaktgeber in der genannten, einzigen, vorbestimmten Lage befindet, um den Durchgang eines verriegelungselementes (4100, 4200) zu ermöglichen.

45. Baugruppe nach einem der Ansprüche 41 bis 44, **dadurch gekennzeichnet, daß** das Verriegelungselement (4100), das dazu eingerichtet ist, in die Kerbe (6060) der Maske (6000) in der einzigen, vorbestimmten Lage des Kontaktgebers einzufallen, von einer elastischen Rastpratze gebildet ist.

46. Baugruppe nach Anspruch 45, **dadurch gekennzeichnet, daß** die elastische Rastpratze (4100) fest mit einem Element (4000) verbunden ist, das auf der Oberseite einer Lenksäule befestigt ist.

47. Baugruppe nach Anspruch 45, **dadurch gekennzeichnet, daß** die elastische Rastpratze (4100) fest mit einem Lenkrad verbunden ist.

48. Baugruppe nach einem der Ansprüche 41 bis 47, **dadurch gekennzeichnet, daß** das Verriegelungselement, das in der Lage ist, in die Kerbe (6060) der Maske (6000) in der einzigen, vorbestimmten Lage einzufallen, aus mindestens einem überstehenden Vorsprung (4200) gebildet ist.

49. Baugruppe nach Anspruch 48, **dadurch gekennzeichnet, daß** der überstehende Vorsprung (4200) fest mit dem oberen Teil der Lenksäule verbunden ist.

50. Baugruppe nach Anspruch 48, **dadurch gekennzeichnet, daß** der überstehende Vorsprung (4200) fest mit einem Lenkrad verbunden ist.

51. Baugruppe nach einem der Ansprüche 41 bis 50, **dadurch gekennzeichnet, daß** die spiralige Nut (3040) auf dem beweglichen Gehäuseelement (3000) ausgebildet ist.

52. Baugruppe nach einem der Ansprüche 41 bis 50, **dadurch gekennzeichnet, daß** die spiralige Nut (3040) auf einem zwischenelement vorgesehen ist, das zwischen dem beweglichen Gehäuseelement (3000) und dem festen Gehäuseelement (1000) liegt, wobei dieses Zwischenelement zur Drehung mit dem beweglichen Element verbunden ist.

53. Baugruppe nach einem der Ansprüche 41 bis 52, **dadurch gekennzeichnet, daß** das Ritzel (5000) durch seine äußere Verzahnung einerseits mit einer Verzahnung (1300), die auf dem genannten anderen Element (1000) vorgesehen ist, und andererseits mit einer Verzahnung (6040) in Eingriff steht, die auf der Maske (6000) vorgesehen ist.

54. Baugruppe nach Anspruch 53, **dadurch gekennzeichnet, daß** die Maske (6000) einen Absatz (6020) aufweist, der auf ihrem Außenumfang mündet und'dessen Boden mit Zähnen (6040) ausgestattet ist, die mit dem Ritzel (5000) zusammenwirken.

55. Baugruppe nach einem der Ansprüche 41 bis 54, **dadurch gekennzeichnet, daß** das Ritzel (5000) von einem Zwischenteil (1900) getragen ist, das in der Ringkammer (1100) des Kontaktgebers sitzt.

56. Baugruppe nach einem der Ansprüche 41 bis 55, **dadurch gekennzeichnet, daß** die Maske (600) aus einem Kranz gebildet ist, der am Umfang mit Abdeckzonen (608) ausgestattet ist, der eine nicht koplanare Kerbe (606) umrahmt.

57. Baugruppe nach Anspruch 56, **dadurch gekennzeichnet, daß** das feste Gehäuseelement (100) am Umfang Strukturen (140) zur Kraftaufnahme aufweist, die dazu eingerichtet sind, die Abdeckzonen (608) der Maske zu tragen.

58. Baugruppe nach einem der Ansprüche 1 bis 57, **dadurch gekennzeichnet, daß** sie Mittel (12) aufweist, die einem Indexglied (40, 510) zugeordnet sind, um die relative Anzahl der Umdrehungen zwischen dem festen Element (10, 100) und dem beweglichen Element (20, 200) sichtbar zu machen.

## Claims

1. An assembly for the top of a motor vehicle steering column, the assembly comprising:
- a stationary, first box element (10, 100, 1000) designed to be fixed to the top of a steering column;
- a moving, second box element (20, 200, 2000) designed to be constrained to turn with the steering wheel; and
- control means (50, 400, 6000) engaging simultaneously with the stationary, first box element (10, 100, 1000) and with the moving, second box element (20, 200, 3000) in order to be moved relative thereto during relative rotation between said elements, the assembly being **characterized by** the fact that said control means comprise a moving flap (400) or mask (50, 6000) imposing a single assembly position for the steering wheel.

2. An assembly according to claim 1, **characterized by** the fact that the control means (50, 400, 6000) comprise complementary shape means allowing the steering wheel to be put into place only in a single predetermined relative position of the stationary and moving elements (10, 100, 1000; 20, 200, 3000).

3. An assembly according to claim 1 or claim 2, **characterized by** the fact that said control means (50, 400, 6000) give access to the steering wheel fixing means (30) only in a single relative position of the two elements.

4. An assembly according to any one of claims 1 to 3, **characterized by** the fact that it further comprises a flexible, electrically-conductive element (C, 300, 7000) placed between the stationary elements (10, 100, 1000) and the moving element (20, 200, 3000) to form a rotary electrical contactor.

5. An assembly according to any one of claims 1 to 4, **characterized by** the fact that it includes:
- a radial groove provided on a first piece (10);
- a spiral groove (22) and a ramp (24) provided on a second piece (20) capable of rotating relative to the first piece;
- an index (40) engaged firstly with the spiral groove (22) and secondly with the radial groove so that said index (40) is moved radially along the radial groove during relative displacement between the two pieces (10, 20), said index (40) having a groove (43); and
- a mask (50) adapted to be engaged in the groove (43) of the index (40) and resting on the ramp (24) of the second piece (20) so that said ramp (24) allows the mask (50) to engage in the groove (43) only in a single predetermined relative position between the stationary element (10) and the moving element (20), the mask (50) preventing access to the steering wheel fixing means (30) when it is urged towards the outside of the groove (43) by said ramp (24).

6. An assembly according to claim 5, **characterized by** the fact that the first piece (10) provided with the radial groove corresponds to the stationary element (10).

7. An assembly according to claim 5 or claim 6, **characterized by** the fact that the second piece provided with the spiral groove (22) and with the ramp (24) corresponds to the moving element (20).

8. An assembly according to claim 5 or claim 6, **characterized by** the fact that the second piece provided with the spiral groove (22) and the ramp (24) corresponds to an intermediate piece situated between the stationary element (10) and the moving element (20), and constrained to rotate at least indirectly with the moving element (20).

9. An assembly according to any one of claims 5 to 8, **characterized by** the fact that the ramp (24) provided on the second piece (20) is constituted by an annular rib having a localized setback (25).

10. An assembly according to any one of claims 5 to 9, **characterized by** the fact that the index (40) comprises a body (42) engaged in the radial groove of the stationary element (10) and complementary to the width of said groove so that the index (40) is free to slide radially in the groove.

11. An assembly according to any one of claims 5 to 10, **characterized by** the fact that the index (40) has a finger (44) engaged in the spiral groove (22).

12. An assembly according to any one of claims 5 to 11, **characterized by** the fact that the groove (43) formed in the index (40) is oriented in a peripheral direction relative to the axis of rotation of said moving, second box element.

13. An assembly according to any one of claims 5 to 12, **characterized by** the fact that the mask (50) comprises a sheet (52) having a bore (53) positioned so as to be centered on the steering wheel fixing means (30) only in a single relative position of the stationary element (10) and the moving element (20).

14. An assembly according to claim 13, **characterized by** the fact that the sheet (52) is formed by a cylindrical sector.

15. An assembly according to claim 13 or claim 14, **characterized by** the fact that the bore (53) is dimensioned to allow the head of a screw (34) belonging to the steering wheel fixing means to be engaged when it is centered thereon.

16. An assembly according to any one of claims 5 to 15, **characterized by** the fact that the mask (50) possesses a wall (54) suitable for being inserted in the groove (43) of the index (40).

17. An assembly according to claim 16, **characterized by** the fact that the wall (54) is formed by a cylindrical sector.

18. An assembly according to any one of claims 5 to 17, **characterized by** the fact that the mask (50) possesses a peg (56) adapted to rest on the ramp (24) and to penetrate into a localized setback (25) thereof.

19. An assembly according to any one of claims 5 to 18, **characterized by** the fact that the mask (50) is guided in axial translation on the stationary element.

20. An assembly according to any one of claims 5 to 19, **characterized by** the fact that resilient means are provided urging the mask (50) towards the inside of the groove (43) in the index (40).

21. An assembly according to any one of claims 1 to 4, **characterized by** the fact that it includes a keying flap (400) pivotally hinged on one of the elements (100, 140) and drive means (500, 510) for driving the keying flap (400), the drive means comprising a spiral guide (250) associated with the other element (200) and concentric with the axis of relative rotation between the two elements (100, 200), and an index (510) which is both hinged to the keying flap (400) and engaged in the spiral guide (250).

22. An assembly according to claim 21, **characterized by** the fact that the keying flap (400) is mounted to move in pivoting and in sliding over one of the elements (100, 140).

23. An assembly according to claim 21 or claim 22, **characterized by** the fact that the keying flap (400) is mounted to pivot on a spacer (140) constrained to turn with the box (100).

24. An assembly according to any one of claims 21 to 23, **characterized by** the fact that the means (500, 510) for driving the keying flap (400) comprise a spiral segment (514) engaged in a spiral guide (250) associated with one of the two elements (100, 200), and a stub axle (512) engaged in a complementary hole formed in the keying flap (400).

25. An assembly according to any one of claims 21 to 24, **characterized by** the fact that the keying flap (400) is provided with at least one cheek (432) adjacent to a recess (410) adapted to cover fixing means (120) when the two elements (100, 200) are moved away from said single relative position.

26. An assembly according to any one of claims 21 to 25, **characterized by** the fact that the keying flap (400) has cheeks (412, 414) respectively on either side of a recess (410) for recovering a fixing lug (120) when the two elements (100, 200) are moved away from said single relative position.

27. An assembly according to any one of claims 21 to 26, **characterized by** the fact that it further comprises at least one cutout (202, 141) in at least one of the elements (100, 200), which cutout (141, 202) is positioned facing a fixing lug (120) at least in one relative position of the elements (100, 200).

28. An assembly according to any one of claims 21 to 27, **characterized by** the fact that it further comprises a window (290) in one of the two elements (100, 200) and positioned to coincide with an index (510) engaged in a spiral guide (250) formed in one of the two elements (100, 200) in a predetermined relative position thereof.

29. An assembly according to any one of claims 21 to 28, **characterized by** the fact that the keying flap (400) is mounted to move on one of the elements (100), and by the fact that it has a resilient member urging the keying flap towards the other element (200).

30. An assembly according to claim 29, **characterized by** the fact that said other element possesses a housing (240) in its surface facing the keying flap (400), and by the fact that the keying flap possesses a cam structure (430) suitable for resting in the housing (240) in said single relative position.

31. An assembly according to any one of claims 21 to 30, **characterized by** the fact that the keying flap (400) is mounted to move on an element (100) which possesses two stub axles (144, 146) engaged in respective guide zones (420, 422) formed in the keying flap (400).

32. An assembly according to claim 31, **characterized by** the fact that at least one of the guide zones (420) is curved and opens out into a recess (410) formed in the keying flap (400).

33. An assembly according to claim 31 or claim 32, **characterized by** the fact that at least one of the guide zones (422) is formed by a groove which opens out to the outside of the keying flap (400).

34. An assembly according to any one of claims 31 to 33, **characterized by** the fact that the width of the guide zones (420, 422) is complementary to the width of the stub axles (144, 146) to allow relative displacement between them.

35. An assembly according to any one of claims 31 to 34, **characterized by** the fact that at least one of the guide zones is formed by a curved groove centered on the axis of a stub axle (146, 144) placed in the other guide zone (422).

36. An assembly according to any one of claims 21 to 35, **characterized by** the fact that the keying flap (400) is mounted to pivot on the box (100) and co-operates with guide means comprising an index (510) engaged in a spiral guide (250) formed in the cover (200).

37. An assembly according to any one of claims 21 to 35, **characterized by** the fact that the keying flap (400) is mounted to pivot on the cover (200) and co-operates with drive means comprising an index (510) engaged in a spiral guide (250) formed on the box (100).

38. An assembly according to any one of claims 1 to 37, **characterized by** the fact that the steering wheel fixing means (30) comprise at least one screw (34).

39. An assembly according to claim 38, **characterized by** the fact that the screw (34) is oriented radially relative to the axis of the steering column.

40. An assembly according to claim 38, **characterized by** the fact that the fixing means (30) are oriented parallel to the axis of the steering column.

41. An assembly according to any one of claims 1 to 4, **characterized by** the fact that it includes:
- a spiral groove (3040) on a part constrained to rotate with one of the elements (3000);
- at least one gearwheel (5000) provided with a finger (5100) engaged in said spiral groove (3040), which gearwheel (5000) meshes with a part associated with the other element (1000); and
- a mask (6000) mounted to move on the contactor and meshing with said gearwheel (5000), which mask (6000) possesses at least one peripheral notch (6060) which is free to allow the contactor to be put into place only when said elements are in a single predetermined position.

42. An assembly according to claim 41, **characterized by** the fact that the stationary box element (1000) has a peripheral notch suitable for co-operating with said notch (6060) of the mask when the contactor is in said predetermined single position to allow a locking element (4100, 4200) to pass.

43. An assembly according to claim 41 or claim 42, **characterized by** the fact that the stationary box element (1000) is secured to a support plate (2000) and co-operates therewith to define a passage (1200) suitable for co-operating with the notch (6060) of the mask (6000) when the contactor is in said predetermined single position to allow a locking element (4100, 4200) to pass.

44. An assembly according to any one of claims 41 to 43, **characterized by** the fact that the moving box element (3000) possesses a peripheral notch (3060) suitable for co-operating with the notch (6060) of the mask (6000) when the contactor is in said predetermined single position to allow a locking element (4100, 4200) to pass.

45. An assembly according to any one of claims 41 to 44, **characterized by** the fact that the locking element (4100) suitable for penetrating in the notch (6060) of the mask (6000) in the predetermined single position of the contactor is formed by a resilient snap-fastening tab.

46. An assembly according to claim 45, **characterized by** the fact that the resilient snap-fastening tab (4100) is secured to an element (4000) fixed to the top of a steering column.

47. An assembly according to claim 45, **characterized by** the fact that the resilient snap-fastening tab (4100) is secured to a steering wheel.

48. An assembly according to any one of claims 41 to 47, **characterized by** the fact that the locking element suitable for penetrating into the notch (6060) of the mask (6000) in the predetermined single position is formed by at least one cantilevered-out stud (4200).

49. An assembly according to claim 48, **characterized by** the fact that the cantilevered-out stud (4200) is secured to the top of a steering column.

50. An assembly according to claim 48, **characterized by** the fact that the cantilevered-out stud (4200) is secured to a steering wheel.

51. An assembly according to any one of claims 41 to 50, **characterized by** the fact that the spiral groove (3040) is formed in the moving box element (3000).

52. An assembly according to any one of claims 41 to 50, **characterized by** the fact that the spiral groove (3040) is provided on an intermediate element situated between the moving element (3000) and the stationary element (1000) of the box, said intermediate element being constrained to rotate with the moving element.

53. An assembly according to any one of claims 41 to 52, **characterized by** the fact that the gearwheel (5000) meshes via an outside set of teeth firstly with a set of teeth (1300) provided on said other element (1000) and secondly with a set of teeth (6040) provided on the mask (6000).

54. An assembly according to claim 53, **characterized by** the fact that the mask (6000) has a setback (6020) which opens out to its outer periphery and which has a bottom provided with teeth (6040) co-operating with the gearwheel (5000).

55. An assembly according to any one of claims 41 to 54, **characterized by** the fact that the gearwheel (5000) is carried by an intermediate piece (1900) situated in the annular chamber (1100) of the contactor.

56. An assembly according to any one of claims 41 to 55, **characterized by** the fact that the mask (600) is formed by a ring provided at its periphery with masking zones (608) on either side of a non-coplanar notch (606).

57. An assembly according to claim 56, **characterized by** the fact that the stationary box element (100) has at its periphery structure (140) for taking up force and suitable for supporting the masking zones (608) of the mask.

58. An assembly according to any one of claims 1 to 57, **characterized by** the fact that it includes means (12) associated with an index (40, 510) for showing the number of relative turns between the stationary element (10, 100) and the moving element (20, 200).
